# EUROPEAN PATENT SPECIFICATION

(11) **EP 3 224 267 B1**
(45) Date of publication and mention of the grant of the patent: **24.02.2021**
(21) Application number: 15808268.5
(22) Date of filing: 24.11.2015
(51) Int. Cl.: C07F 9/50, C08F 4/20, C08F 4/68, C08F 10/00, C08F 136/06, C07F 9/46

(54) **PHOSPHINIC VANADIUM COMPLEX, CATALYTIC SYSTEM COMPRISING SAID PHOSPHINIC VANADIUM COMPLEX AND PROCESS FOR THE (CO) POLYMERIZATION OF CONJUGATED DIENES**
PHOSPHINISCHER VANADIUMKOMPLEX, KATALYSATORSYSTEM MIT DIESEM PHOSPHINISCHEN VANADIUMKOMPLEX UND VERFAHREN ZUR (CO)POLYMERISATION VON KONJUGIERTEN DIENEN
COMPLEXE DE VANADIUM PHOSPHINIQUE, SYSTÈME CATALYTIQUE COMPRENANT LEDIT COMPLEXE DE VANADIUM PHOSPHINIQUE ET PROCÉDÉ DE (CO)POLYMÉRISATION DE DIÈNES CONJUGUÉS

(30) Priority: 25.11.2014 IT MI20142028
(43) Date of publication of application: 04.10.2017
(73) Proprietor: Versalis S.p.A., 20097 San Donato Milanese (MI) (IT)
(72) Inventor: RICCI, Giovanni, 43126 Parma (IT); LEONE, Giuseppe, 20133 Milano (IT); SOMMAZZI, Anna, 16038 Santa Margherita Ligure (GE) (IT); FORNI, Alessandra, 20066 Melzo (MI) (IT); MASI, Francesco, 26866 S. Angelo Lodigiano (LO) (IT)
(74) Representative: Cernuzzi, Daniele
(86) International application number: PCT/IB2015/059072
(87) International publication number: WO 2016/128812

(56) References cited:
- EP-A1- 2 039 677
- David G L Holt ET AL: "Synthesis and structural studies of complexes of vanadium(I1) and vanadium(II1) halides with tertiary phosphines", Inorganica Chirnica Acta, 1 January 1993 (1993-01-01), pages 11-19, XP055202568, Retrieved from the Internet: URL:http://www.sciencedirect.com/science/a rticle/pii/S0020169300914506/pdf?md5=f4828 3cf4316b5f51be90ff0f05efc09&pid=1-s2.0-S00 20169300914506-main.pdf [retrieved on 2015-07-15]
- J Nieman ET AL: "Preparation and characterization of mono-cyclopentadienylvanadium dihalide bis-phosphine complexes; crystal structure of ([eta]5-C5H5)VCL2(PMe3)2", Journal of Organometallic Chemistry, 1 October 1983 (1983-10-01), pages 193-204, XP055202519, DOI: 10.1016/0022-328X(83)87022-3 Retrieved from the Internet: URL:http://www.sciencedirect.com/science/a rticle/pii/0022328X83870223/pdf?md5=58a420 156a8ffd0ce94b5242668def3f&pid=1-s2.0-0022 328X83870223-main.pdf
- BRADLEY S ET AL: "SYNTHESIS AND STRUCTURE OF AMINO-FUNCTIONALIZED CYCLOPENTADIENYL VANADIUM COMPLEXES AND EVALUATION OF THEIR BUTADIENE POLYMERIZATION BEHAVIOR", ORGANOMETALLICS, ACS, WASHINGTON, DC, US, vol. 21, no. 6, 1 January 2002 (2002-01-01), pages 3443-3453, XP001189047, ISSN: 0276-7333, DOI: 10.1021/OM020170F
- ANN R. HERMES ET AL: "Phosphine complexes of trivalent early transition metals. X-ray crystal structure of the d1-d1 (1,2-bis(diisopropylphosphino)ethane)trich lorotitanium dimer and synthesis of the alkyl (1,2-bis(diisopropylphosphino)ethane)dichl oro(methyl)(THF)chromium", INORGANIC CHEMISTRY, vol. 29, no. 2, 1 January 1990 (1990-01-01), pages 313-317, XP055202760, ISSN: 0020-1669, DOI: 10.1021/ic00327a032
- Wenerios Tsagkalidis ET AL: "Hydrazine complexes of vanadium(I1 and III)", Inorganica Chimica Acta, 1 January 1993 (1993-01-01), pages 239-243, XP055202739, Retrieved from the Internet: URL:http://www.sciencedirect.com/science/a rticle/pii/S0020169300855449/pdf?md5=5bf2d b703c14691f2faa2aeb047242e8&pid=1-s2.0-S00 20169300855449-main.pdf
- A. HILLS ET ALIA: "Compounds with Vanadium-Nitrogen and Vanadium-Oxygen multiple bonds", J. CHEM. SOC. DALTON TRANSACTIONS, 1993, pages 3609-3617, XP002742357,
- K. ISSLEIB ET AL: "Beitr�ge zur Komplexchemie terti�rer Phosphine und Phosphinoxyde. IV. Phosphin- und Phosphinoxydkomplexe des 3wertigen Vanadins", ZEITSCHRIFT F&#XFFFD;R ANORGANISCHE UND ALLGEMEINE CHEMIE, vol. 301, no. 3-4, 1 September 1959 (1959-09-01), pages 188-196, XP055202532, ISSN: 0044-2313, DOI: 10.1002/zaac.19593010308
- RICCI G ET AL: "Polymerization of 1,3-dienes with catalysts based on mono- and bis-cyclopentadienyl derivatives of vanadium", POLYMER, ELSEVIER SCIENCE PUBLISHERS B.V, GB, vol. 37, no. 2, 1 January 1996 (1996-01-01), pages 363-365, XP004065489, ISSN: 0032-3861, DOI: 10.1016/0032-3861(96)81112-8 cited in the application
- Zhongbao Jian ET AL: "Rare-earth metal bis(alkyl)s that bear a 2-pyridinemethanamine ligand: Dual catalysis of the polymerizations of both isoprene and ethylene", Dalton Transactions, vol. 41, no. 8, 1 January 2012 (2012-01-01), page 2367, XP055575695, ISSN: 1477-9226, DOI: 10.1039/c1dt11890k

## Description

The present invention relates to the (co)polymerization of conjugated dienes comprising a phosphinic vanadium complex and is defined in the appended claims. Furthermore, the present invention relates to a process for the polymerization of 1-3-butadiene or isoprene, characterized in that it uses said catalytic system, as defined in the appended claims. It is known that the stereospecific (co)polymerization of conjugated dienes is a very important process in the chemical industry in order to obtain products that are among the most widely used rubbers.

Said stereospecific (co)polymerization can provide polymers with different structures, i.e. 1,4-trans structure, 1,4-cis structure, 1,2 structure and, in the case of asymmetric conjugated dienes (e.g., isoprene), 3,4 structure.

Catalytic systems based on vanadium have been known for some time in the field of (co)polymerization of conjugated dienes for their ability to provide diene (co)polymers with a 1,4-trans structure and are by far the most important systems for preparing 1,4-trans polybutadiene as described, for example, in: Porri L. et al., "Comprehensive Polymer Science" (1989), Eastmond G. C. et al. Eds., Pergamon Press, Oxford, UK, Vol. Heterogenous catalytic systems obtained through the combination of halides of vanadium [e.g., vanadium(III)chloride (VCl₃), vanadium(IV)chloride (VCl₄)] with aluminum-alkyls [e.g., tri-ethyl-aluminum (AlEt₃), di-ethyl-aluminum chloride (AlEt₂Cl)], provide a 1,4-trans polibutadiene (1,4-trans unit content equal to 97%-100%), crystalline, with high molecular weight, and having a melting point (Tₘ) of about 145°C. Further details on said catalytic systems can be found, for example, in: Natta G. et al., "La Chimica e L'Industria" (1958), Vol. 40, pag. 362 and "Chemical Abstract" (1959), Vol. 53, pag. 195; Natta G. et al., "La Chimica e L'Industria" (1959), Vol. 41, pag. 116 and "Chemical Abstract" (1959), Vol. 53, pag. 15619.

Polybutadiene with high 1,4-trans unit content, but with a low molecular weight, can be prepared with homogeneous catalytic systems such as, for example, vanadium(III)chloride(tri-tetrahydrofuran)/di-ethyl-aluminum chloride (VCl₃(THF)₃/AlEt₂Cl), vanadium(III)acetylacetonate/di-ethyl-aluminum chloride [V(acac)₃/AlEt₂Cl] and vanadium(III)acetylacetonate/methylaluminoxane [V(acac)₃/MAO]. Further details on said catalytic systems can be found, for example, in: Natta G. et al., "Atti Accademia Nazionale dei Lincei - Classe di Scienze fisiche, matematiche e naturali" (1961), Vol. 31(5), pag. 189 and "Chemical Abstract" (1962), Vol. 57, pag. 4848; Porri L. et al., "Die Makromoleculare Chemie" (1963), Vol. 61(1), pag. 90-103; Ricci G. et al., "Polymer Communication" (1991), Vol. 32, pag. 514-517; Ricci G. et al., "Journal of Polymer Science Part A: Polymer Chemistry" (2007), Vol. 45(20), pag. 4635-4646.

Some of the aforementioned homogeneous catalytic systems, for example, vanadium(III)acetylacetonate/tri-ethyl-aluminum [V(acac)₃/AlEt₃], have some interest for the preparation of 1,2 polybutadiene, as described, for example, in Natta G. et al., "La Chimica e L'Industria" (1959), Vol. 41, pag. 526 and "Chemical Abstract" (1960), Vol. 54, pag. 1258.

Catalytic systems obtained by combining cyclopentadienyl vanadium derivatives such as, for example, bis(cyclopentadienyl)vanadium chloride/methylaluminoxane (Cp₂VCl/MAO) and cyclopentadienylvanadium tri-chloride tri-triethylphosphine/methylaluminoxane [CpVCl₃(PEt₃)₃/MAO], are able to provide a polybutadiene with a prevalently 1,4-cis structure (1,4-cis unit content equal to about 85%). Further details on said catalytic systems can be found, for example, in: Ricci G. et al., "Polymer" (1996), Vol. 37(2), pag. 363-365; Porri L. et al., "Metalorganic Catalyst for Synthesis and Polymerization" (1999), Kaminsky W. Ed., Springer-Verlag Berlin Heidelberg, pag. 519-530.

It is also known that catalytic systems based on vanadium are also active for the polymerization of isoprene. In particular, the tri-alkyl aluminum/vanadium(III)chloride catalytic system (AlR₃/VCl₃ wherein R = methyl, ethyl, propyl, butyl, preferably ethyl), provides polyisoprene with a high 1,4-trans unit content, even if the level of activity is quite low. Preferably, said polymerization is carried out operating at an Al/V molar ratio preferably ranging from 3 to 6, in the presence of an aliphatic solvent (e.g., n-heptane), at a relatively low temperature, preferably ranging from 20°C to 50°C.

Vanadium complexes with phosphine are also known in literature.

For example, Bansemer R. L. et al., "Inorganic Chemistry" (1985), Vol. 24(19), pag. 3003-3006, report the synthesis and characterization of the complex VCl₃(PMePh₂)₂ wherein Me = methyl and Ph = phenyl.

Bultitude G. et al., in "Journal of the Chemical Society, Dalton Transactions" (1986), Issue 10, pag. 2253-2258, report the synthesis and characterization of the complex VCl₃(PMePh₂)₂ wherein Me = methyl and Ph = phenyl and its adducts from acetonitrile. Girolami S. G. et al., in "Journal of the Chemical Society, Dalton Transactions" (1985), Issue 7, pag. 1339-1348, report the synthesis and properties of divalent complexes of 1,2-bis(dimethylphosphino)ethane (dmpe) such as MCl₂(dmpe)₂ and MMe₂(dmpe)₂ wherein M = Ti, V, Cr, Mn, or Fe.

Since (co)polymers of conjugated dienes, in particular polybutadiene and polyisoprene, with a prevalent 1,4-trans and 1,4-cis unit content can be advantageously used for producing tires, in particular for tire treads, as well as in the footwear industry (e.g., for producing soles for shoes), the study of new catalytic systems able to provide said (co)polymers is still of great interest.

The Applicant set out to solve the problems of finding a new vanadium phosphinic complex that can be used in a catalytic system able to give (co)polymers of conjugated dienes, such as, for example, linear or branched polybutadiene or linear or branched polyisoprene, with a prevalent 1,4-trans and 1,4-cis unit content, i.e. having a 1,4-trans and 1,4-cis unit content ≥ 60%, preferably ranging from 70% to 99%.

The Applicant has now found a new vanadium phosphinic complex having general formula (I) or (II) defined below, able to give (co)polymers of conjugated dienes, such as, for example, linear or branched polybutadiene or polyisoprene, with a prevalent 1,4-trans and 1,4-cis unit content, i.e. having a 1,4-trans and 1,4-cis unit content ≥ 60%, preferably ranging from 70% to 99%.

Therefore, disclosed is a vanadium phosphinic complex having general formula (I) or (II):

V(X)₃[P(R₁)ₙ(R₂)₃₋ₙ]₂ (I)

V(X)₃[(R₃)₂P(R₄)P(R₃)₂] (II)

wherein:
- X represents an anion selected from halogens such as, for example, chlorine, bromine, iodine, preferably chlorine; or is selected from the following groups: thiocyanate, isocyanate, sulfate, acid sulfate, phosphate, acid phosphate, carboxylate, dicarboxylate;
- R₁, identical or different among them, represent a hydrogen atom, or an allyl group (CH₂ = CH-CH₂-); or are selected from alkyl groups C₁-C₂₀, preferably C₁-C₁₅, linear or branched, optionally halogenated, optionally substituted cycloalkyl groups;
- n is an integer ranging from 0 to 3;
- R₂, identical or different among them, are selected from optionally substituted aryl groups;
- R₃, identical or different among them, represent a hydrogen atom, or an allyl group (CH₂ = CH-CH₂-); or are selected from alkyl groups C₁-C₂₀, preferably C₁-C₁₅, linear or branched, optionally halogenated, optionally substituted cycloalkyl groups, optionally substituted aryl groups;
- R₄ represents a group -NR₅ wherein R₅ represents a hydrogen atom, or is selected from C₁-C₂₀ alkyl groups, preferably C₁-C₁₅, linear or branched; or R₄ represents an alkylene group - (CH₂) p- wherein p represents an integer ranging from 1 to 5;
provided that in the general formula (I), in case n is equal to 1 and R₁ is methyl, R₂ is different from phenyl.

For the purpose of the present description and of the following claims, the definitions of the numeric ranges always include the extremes unless specified otherwise.

For the purpose of the present description and of the following claims, the term "comprising" also includes the terms "which consists essentially of" or "which consists of". The term "C₁-C₂₀ alkyl groups" means alkyl groups having from 1 to 20 carbon atoms, linear or branched. Specific examples of C₁-C₂₀ alkyl groups are: methyl, ethyl, n-propyl, *iso*-propyl, n-butyl, s-butyl, *iso*-butyl, tert-butyl, pentyl, hexyl, heptyl, octly, n-nonyl, n-decyl, 2-butyloctyl, 5-methylhexyl, 4-ethylhexyl, 2-ethylheptyl, 2-ethylhexyl.

The term "optionally halogenated C₁-C₂₀ alkyl groups" means alkyl groups having from 1 to 20 carbon atoms, linear or branched, saturated or unsaturated, wherein at least one of the hydrogen atoms is substituted with a halogen atom such as, for example, fluorine, chlorine, bromine, preferably fluorine, chlorine. Specific examples of C₁-C₂₀ alkyl groups optionally containing heteroatoms are: fluoromethyl, difluoromethyl, trifluoromethyl, trichloromethyl, 2,2,2-trifluoroethyl, 2,2,2-trichloroethyl, 2,2,3,3-tetrafluoropropyl, 2,2,3,3,3-pentafluoropropyl, perfluoropentyl, perfluorooctyl, perfluorodecyl.

The term "cycloalkyl groups" means cycloalkyl groups having from 3 to 30 carbon atoms. Said cycloalkyl groups can be optionally substituted with one or more groups, the same or different from one another, selected from: halogen atoms; hydroxyl groups; C₁-C₁₂ alkyl groups; C₁-C₁₂ alkoxy groups; cyano groups; amine groups; nitro groups. Specific examples of cycloalkyl groups are: cyclopropyl, 2,2-difluorocyclopropyl, cyclobutyl, cyclopentyl, cyclohexyl, hexamethylcyclohexyl, pentamethlylcyclopentyl, 2-cyclooctylethyl, methylcyclohexyl, methoxycyclohexyl, fluorocyclohexyl, phenylcyclohexyl. The term "aryl groups" means carbocyclic aromatic groups. Said carbocyclic aromatic groups can be optionally substituted with one or more groups, the same or different from one another, selected from: halogen atoms such as, for example, fluorine, chlorine, bromine; hydroxyl groups; C₁-C₁₂ alkyl groups; C₁-C₁₂ alkoxy groups; cyano groups; amine groups; nitro groups. Specific examples of aryl groups are: phenyl, methylphenyl, trimethylphenyl, methoxyphenyl, hydroxyphenyl, phenyloxyphenyl, fluorophenyl, pentafluorophenyl, chlorophenyl, bromophenyl, nitrophenyl, dimethylaminophenyl, naphthyl, phenylnaphthyl, phenanthrene, anthracene.

In accordance with a preferred embodiment of the present invention, in said phosphinic vanadium complex having general formula (I) or (II):
- X is an anion selected from halogen such as, for example, chlorine, bromine, iodine, preferably chlorine;
- R₁, identical or different among them, are a hydrogen atom; or are selected from C₁-C₂₀ alkyl groups, preferably C₁-C₁₅, linear or branched, preferably are methyl, ethyl, *iso*-propyl, *tert-*butyl; or are selected from optionally substituted cycloalkyl groups, preferably are cyclopentyl, cyclohexyl;
- n is an integer ranging from 0 to 3;
- R₂, identical among them, are selected from optionally substituted aryl groups, preferably are phenyl;
- R₃, identical among them, are selected from C₁-C₂₀ alkyl groups, preferably C₁-C₁₅, linear or branched, preferably are methyl, ethyl; or are selected from optionally substituted aryl groups, preferably are phenyl;
- R₄ represents a group -NR₅ wherein R₅ is a hydrogen atom; or R₄ represents a group - (CH₂) p- wherein p is 2.

The phosphinic vanadium complex having general formula (I) or (II) can be considered, in accordance with the present invention, under any physical form such as, for example, the isolated and purified solid form, the solvated form with an appropriate solvent, or the one supported on suitable organic or inorganic solids, preferably having a granular or powdered physical form.

The phosphinic vanadium complex having general formula (I) or (II) can be prepared according to processes known in the art. For example, said phosphinic vanadium complex can be prepared by a reaction between vanadium compounds having general formula V(X)₃ wherein X is a halogen atom such as, for example, chlorine, bromine, iodine, preferably chlorine, as such or complexed with ethers [for example, diethylether, tetrahydrofuran (THF), dimethoxyethane], preferably complexed with tetrahydrofuran (THF), with phosphines selected, for example, from: tri-phenylphosphine, tris(pentafluorophenyl)phosphine, tris(*p*-tri-fluoromethylphenyl)phosphine, tris(2,4,6-trimethoxyphenyl)-phosphine, tris(2,4,6-tri-methylphenyl)phosphine, diphenylphosphine, tris(o-tolyl)phosphine, tris(m-tolyl)phosphine, tris(p-tolyl)phosphine, tris(o-methoxyphenyl)phosphine, tris(m-methoxyphenyl)phosphine, tris(p-methoxyphenyl)phosphine, tris(2,4-dimethylphenyl)phosphine, tri-1-napthylphosphine, (o-tolyl)diphenylphosphine, (methyl)di-phenylphosphine, (ethyl)diphenylphosphine, (n-propyl)diphenylphosphine, (*iso*-propyl)diphenylphosphine, (allyl)diphenylphosphine, (*tert-*butyl)diphenylphosphine, (cyclohexyl)diphenylphosphine, (trimethylsilyl)diphenylphosphine, di(methyl)phenylphosphine, di(ethyl)phenylphosphine, di(n-propyl)phenylphosphine, di(*tert*-butyl)phenylphosphine, di(cyclohexyl)phenylphosphine, triethylphosphine, tri(n-propyl)phosphine, tri(iso-propyl)phosphine, tri(n-butyl)phosphine, tri(allyl)phosphine, tri(*iso*-butyl)phosphine, *tri*(*tert-*butyl)phosphine, tri(cyclopentyl)phosphine, tri(cyclohexyl)phosphine, tris(trimethylsilyl)phosphine, di(*tert*-butyl)phosphine, methyldi(*tert*butyl)phosphine, di(*tert-*butyl)*iso*-propylphosphine, di(*tert*-butyl)neopentylphosphine, di(cyclopentyl)phosphine, di(cyclohexyl)phosphine, di(2-norbornyl)phosphine, di(*iso*-butyl)phosphine, *tert-*butyldi(cyclohexyl)phosphine, di(*tert*-butyl)cyclohexylphosphine, bis(dimethyl-phosphino)methane, 1,2-bis(dimethylphosphino)ethane, 1,2-bis(diethylphosphino)ethane, 1,3-bis(diethylphosphino)propane, 1,3-bis(diisopropylphosphino)propane, bis(dicyclohexylphosphino)methane, 1,2-bis(dicyclohexylphosphino)ethane, 1,3-bis(dicyclohexylphosphino)propane, bis(diphenyl-phosphino)methane, 1,2-bis(diphenylphosphino)ethane, 1,3-bis(diphenylphosphino)propane, N,N-bis(diphenylphosphino)amine, 1,2-bis(phenylphosphino)ethane, 1,3-bis(phenyl-phosphino)propane, said phosphines being used in stoichiometric quantities, operating, preferably, in the presence of at least one solvent that can be selected, for example, from: hydrocarbon solvents (e.g., toluene), chlorinated solvents (e.g., dichloromethane), ether-based solvents [e.g., tetrahydrofuran (THF)], or mixtures thereof, at a temperature ranging from room temperature to 110°C, preferably at the solvent reflux temperature. The vanadium phosphinic complex thus obtained can be subsequently recovered through methods known in the art such as, for example, precipitation through a nonsolvent (e.g. pentane), followed by separation through filtration or decantation and optional subsequent solubilization in an appropriate solvent followed by crystallization at a low temperature.

For the purpose of the present description and of the following claims the expression "room temperature" means a temperature ranging from 20°C to 25°C.

As mentioned above, disclosed is a catalytic system for the (co)polymerization of conjugated dienes comprising said phosphinic vanadium complex having general formula (I) or (II).

Therefore, disclosed is a catalytic system for the (co)polymerization of conjugated dienes comprising:
(a) at least one phosphinic vanadium complex having general formula (I) or (II);
(b) at least one co-catalyst selected from organo-derivative compounds of aluminum, preferably from:
   (b₁) aluminum compounds having general formula (III):

      Al(R₆)(R₇)(R₈) (III)

      wherein R₆ represents a hydrogen atom, or a fluorine atom, or is selected from C₁-C₂₀ alkyl groups, linear or branched, cycloalkyl groups, aryl groups, alkylaryl groups, arylalkyl groups, alkoxy groups; R₇ and R₈, identical or different among them, are selected from C₁-C₂₀ alkyl groups, linear or branched, cycloalkyl groups, aryl groups, alkylaryl groups, arylalkyl groups;
   (b₂) aluminoxanes having general formula (IV):

      (R₉)₂-Al-O-[-Al(R₁₀)-O-]_{q}-Al-(R₁₁)₂ (IV)

      wherein R₃, R₁₀ e R₁₁, identical or different among them, represent a hydrogen atom, or a halogen atom such as, for example, chlorine, bromine, iodine, fluorine; or are selected from C₁-C₂₀ alkyl groups, linear or branched, cycloalkyl groups, aryl groups, said groups being optionally substituted with one or more atoms of silicon or germanium; and q is an integer ranging from 0 to 1000;
   (b₃) organo-derivative compounds of aluminum partially hydrolyzed;
   (b₄) halogen aluminum alkyls having general formula (V) or (VI):

      Al(R₁₂)ₙ(X₁)₃₋ₙ (V)

      Al₂(R₁₂)ₘ(X₁)₃₋ₘ (VI)

      wherein n is 1 or 2; m is an integer ranging from 1 to 5; R₁₂, identical or different among them, are selected from C₁-C₂₀ alkyl groups, linear or branched; X₁ represents a chlorine or bromine atom, preferably chlorine;
   or mixtures thereof.

Specific examples of aluminum compounds having general formula (III) particularly useful for the purpose of the present invention are: di-ethyl-aluminum hydride, di-n-propyl-aluminum hydride, di-n-butyl-aluminum hydride, di-*iso*-butyl-aluminum hydride (DIBAH), di-phenyl-aluminum hydride, di-p-tolyl-aluminum hydride, di-benzyl-aluminum hydride, di-ethyl-aluminum hydride, phenyl-n-propyl-aluminum hydride, p-tolyl-ethyl-aluminum hydride, p-tolyl-n-propyl-aluminum hydride, *p*-tolyl-*iso*-propyl-aluminum hydride, benzyl-ethyl-aluminum hydride, benzyl-n-propyl-aluminum hydride, benzyl-*iso*-propyl-aluminum hydride, di-ethyl-aluminum ethoxide, di-*iso*-butyl-aluminum ethoxide, di-propyl-aluminum ethoxide, tri-methyl-aluminum, tri-ethyl-aluminum (TEA), tri-n-propyl-aluminum, tri-*iso-*butyl-aluminum (TIBA), tri-n-butyl-aluminum, tri-pentyl-aluminum, tri-hexyl-aluminum, tricyclohexyl-aluminum, tri-octyl-aluminum, tri-phenyl-aluminum, tri-p-tolyl-aluminum, tri-benzyl-aluminum, ethyl-di-phenyl-aluminum, ethyl-di-p-tolyl-aluminum, ethyl-di-benzyl-aluminum, di-ethyl-phenyl-aluminum, di-ethyl-p-tolyl-aluminum, di-ethyl-benzyl-aluminum. Tri-ethyl-aluminum (TEA), tri-*n*-propyl-aluminum, tri-*iso*-butyl-aluminum (TIBA), tri-hexyl-aluminum, di-*iso*-butyl-aluminum hydride (DIBAH), di-ethyl-aluminum fluoride, are particularly preferred.

As is known, aluminoxanes are compounds containing Al-O-Al bonds, with a variable O/AI ratio, obtainable according to procedures known in the art such as, for example, by reaction, in controlled conditions, of an aluminum alkyl or of an aluminum alkyl halogenide, with water, or with other compounds containing predetermined quantities of available water such as, for example, in the case of the reaction of aluminum trimethyl with aluminum sulfate hexahydrate, copper sulfate pentahydrate, or iron sulfate pentahydrate.

Said aluminoxanes and, in particular, methylaluminoxane (MAO), are compounds that can be obtained through known organometallic chemical processes such as, for example, by adding trimethyl aluminum to a hexane suspension of aluminum sulfate hexahydrate. Specific examples of aluminoxanes having general formula (IV) particularly useful for the purpose of the present invention are: methylaluminoxane (MAO), ethyl-aluminoxane, n-butyl-aluminoxane, tetra-*iso*-butyl-aluminoxane (TIBAO), *tert*-butyl-aluminoxane, tetra-(2,4,4-tri-methyl-pentyl)-aluminoxane (TIOAO), tetra-(2,3-di-methyl-butyl)-aluminoxane (TDMBAO), tetra-(2,3,3-tri-methyl-butyl)-aluminoxane (TTMBAO). Methylaluminoxane (MAO) as such or in the "dry" form (MAO-dry) is particularly preferred.

Further details on aluminoxanes having general formula (IV) can be found in international patent application WO 2011/061151.

Preferably, the organo-derivative compounds of aluminum partially hydrolyzed (b₃), are selected from aluminum compounds having general formula (III) charged with at least one proton donating compound, the aluminum compound having general formula (III) and the proton donating compound being used in a molar ratio ranging from 0.001:1 to 0.2:1. Preferably, said proton donating compound can be selected, for example, from: water; alcohols such as, for example, methanol, ethanol, *iso*-propyl alcohol, n-propyl alcohol, *tert*-butanol, *iso*-butyl alcohol, *n*-butyl alcohol; alcohols with higher molecular weight such as, for example, 1-decanol, 2-undecanol; carboxylic acid such as, for example, stearic acid; or mixtures thereof. Water is particularly preferred.

Specific examples of halogen aluminum alkyls having general formula (V) or (VI) are: di-ethyl-chloro-aluminum (AlEt₂Cl), di-methyl-aluminum-chloride (AlMe₂Cl), ethyl-aluminum-di-chloride (AlEtCl₂), di-*iso*-butyl-aluminum-chloride [Al(*i*-Bu)₂Cl); ethyl-aluminum-sesquichloride (Al₂Et₃Cl₃), methyl-aluminum-sesquichloride (Al₂Me₃Cl₃).

In general, the formation of the catalytic system comprising the vanadium phosphinic complex having general formula (I) or (II) and the co-catalyst (b), is preferably carried out in an inert liquid medium, more preferably in a hydrocarbon solvent. The choice of the vanadium phosphinic complex having general formula (I) or (II) and of the co-catalyst (b), as well as the particular methodology used, can vary according to the molecular structures and the desired result, according to what is similarly reported in relevant literature accessible to an expert skilled in the art for other transition metal complexes with ligands of various nature, such as, for example, in: Ricci G. et al., "Advances in Organometallic Chemistry Research" (2007), Yamamoto K. Ed., Nova Science Publisher, Inc., USA, pg. 1-36; Ricci G. et al., "Coordination Chemistry Reviews" (2010), Vol. 254, pg. 661-676; Ricci G. et al., "Ferrocenes: Compounds, Properties and Applications" (2011), Elisabeth S. Phillips Ed., Nova Science Publisher, Inc., USA, pg. 273-313; Ricci G. et al., "Chromium: Environmental, Medical and Material Studies" (2011), Margaret P. Salden Ed., Nova Science Publisher, Inc., USA, pg. 121-1406; Ricci G. et al., "Cobalt: Characteristics, Compounds, and Applications" (2011), Lucas J. Vidmar Ed., Nova Science Publisher, Inc., USA, pg. 39-81; Ricci G. et al., "Phosphorus: Properties, Health effects and Environment" (2012), Ming Yue Chen and Da-Xia Yang Eds., Nova Science Publisher, Inc., USA, pg. 53-94.

Preferably, when used for the formation of a catalytic (co)polymerization system in accordance with the present disclosure the (co)catalysts (b) can be placed in contact with a vanadium phosphinic complex having general formula (I) or (II), in proportions such that the molar ratio between the vanadium present in the vanadium phosphinic complex having general formula (I) or (II) and the aluminum present in the (co)catalysts (b) can be ranging from 1 to 10000, preferably ranging from 50 to 1000. The sequence with which the vanadium phosphinic complex having general formula (I) or (II) and the (co)catalyst are placed in contact with one another is not particularly critical.

For the purpose of the present description and of the following claims, the terms "mole" and "molar ratio" are used both with reference to compounds consisting of molecules and with reference to atoms and ions, omitting for the latter ones the terms gram atom or atomic ratio, even if they are scientifically more accurate.

For the purpose of the present invention, other additives or components can optionally be added to the aforementioned catalytic system so as to adapt it to satisfy specific practical requirements. Additives and/or components that can be added in the preparation and/or formulation of the catalytic system disclosed are, for example: inert solvents, such as, for example aliphatic and/or aromatic hydrocarbons; aliphatic and/or aromatic ethers; weakly coordinating additives (e.g., Lewis bases) selected, for example, from non-polymerizable olefins; sterically hindered or electronically poor ethers; halogenating agents such as, for example, silicon halides, halogenated hydrocarbons, preferably chlorinated; or mixtures thereof.

Said catalytic system can be prepared, as already reported above, according to methods known in the art.

For example, said catalytic system can be prepared separately (preformed) and subsequently introduced into the (co)polymerization environment. On that point, said catalytic system can be prepared by making at least one vanadium phosphinic complex (a) having general formula (I) or (II) react with at least one co-catalyst (b), optionally in presence of other additives or components selected from those reported above, in presence of a solvent such as, for example, toluene, heptane, at a temperature ranging from 20°C to 60°C, for a time ranging from 10 seconds to 10 hours, preferably ranging from 30 seconds to 5 hours.

Alternatively, said catalytic system can be prepared *in situ,* i.e. directly in the (co)polymerization environment. On that point, said catalytic system can be prepared by separately introducing the vanadium phosphinic complex (a) having general formula (I) or (II), the co-catalyst (b) and the pre-selected conjugated diene(s) to be (co)polymerized, operating at the conditions wherein the (co)polymerization is carried out.

Further details on the preparation of said catalytic system can be found in the examples reported below.

For the purpose of the present invention, the aforementioned catalytic systems can also be supported on inert solids, preferably comprising silicon and/or aluminium oxides, such as, for example, silica, alumina or silico-aluminates. For supporting said catalytic systems the known supporting techniques can be used, generally comprising contact, in a suitable inert liquid medium, between the support, potentially activated by heating to temperatures over 200°C, and one or both components (a) and (b) of the catalytic system according to the present invention. It is not necessary, for the purposes of the present invention, for both components to be supported, since only the vanadium phosphinic complex (a) having general formula (I) or (II), or the co-catalyst (b) can be present on the support surface. In the latter case, the missing component on the surface is subsequently placed in contact with the supported component when the active catalyst is to be formed by polymerization.

Disclosed is also the vanadium phosphinic complex having general formula (I) or (II), and the catalytic systems based thereon, which are supported on a solid through the functionalization of the latter and the formation of a covalent bond between the solid and the vanadium phosphinic complex having general formula (I) or (II).

The present invention relates to a (co)polymerization process of conjugated dienes, characterized in that it uses said catalytic system.

The quantity of vanadium phosphinic complex (a) having general formula (I) or (II) and of co-catalyst (b) which can be used in the (co)polymerization of conjugated dienes varies according to the (co)polymerization process to be carried out. Said quantity is however such as to obtain a molar ratio between the vanadium (V) present in the vanadium phosphinic complex having general formula (I) or (II) and the metal present in the co-catalyst (b), i.e. aluminum, comprised between the values reported above.

Specific examples of conjugated dienes that can be (co)polymerized using the catalytic system in accordance with the present invention are: 1,3-butadiene, 2-methyl-1,3-butadiene (isoprene), 2,3-dimethyl-1,3-butadiene, 1,3-pentadiene, 1,3-hexadiene, cyclo-1,3-hexadiene. 1,3-Butadiene, isoprene are preferred. The aforementioned (co)polymerizable conjugated dienes can be used alone, or mixed with two or more dienes. In this latter case, i.e. using a mixture of two or more dienes, a copolymer will be obtained.

In accordance with a particularly preferred embodiment, the present invention relates to a polymerization process of 1,3-butadiene or isoprene, characterized in that it uses said catalytic system.

Generally, said (co)polymerization can be carried out in presence of a polymerization solvent generally selected from inert organic solvents such as, for example: saturated aliphatic hydrocarbons such as, for example, butane, pentane, hexane, heptane, or mixtures thereof; saturated cyclo-aliphatic hydrocarbons such as, for example, cyclopentane, cyclohexane, or mixtures thereof; mono-olefins such as, for example, 1-butene, 2-butene, or mixtures thereof; aromatic hydrocarbons such as, for example, benzene, toluene, xylene, or mixtures thereof; halogenated hydrocarbons such as, for example, methylene chloride, chloroform, carbon tetrachloride, trichloroethylene, perchloroethylene, 1,2-dichloroethane, chlorobenzene, bromobenzene, chlorotoluene, or mixtures thereof. Preferably the (co)polymerization solvent is selected from aromatic or halogenated hydrocarbons.

Alternatively, said (co)polymerization can be carried out using as a (co)polymerization solvent the same conjugated diene(s) that must be (co)polymerized, in accordance with the process known as "bulk process".

Generally, the concentration of the conjugated diene to be (co)polymerized in said (co)polymerization solvent is ranging from 5% in weight to 50% in weight, preferably ranging from 10% in weight to 20% in weight, with respect to the total weight of the mixture conjugated diene and inert organic solvent.

Generally, said (co)polymerization can be carried out at a temperature ranging from - 70°C to +100°C, preferably ranging from -20°C to +80°C.

With regard to pressure, it is preferable to operate at the pressure of the components of the mixture to be (co)polymerized.

Said (co)polymerization can be carried out both continuously and in batches.

As mentioned above, said process allows (co)polymers of conjugated dienes to be obtained such as, for example, linear or branched polybutadiene or linear or branched polyisoprene, with a prevalent content of 1,4-trans and 1,4-cis units, i.e. having a content of 1,4-trans and 1,4-cis units ≥ 60%, preferably ranging from 70% to 99%.

For the purpose of understanding the present invention better and to put it into practice, below are some illustrative and non-limitative examples thereof. Examples 1-12 are not part of the invention and for reference only.

### EXAMPLES

### Reagents and materials

The list below reports the reagents and materials used in the following examples of the invention, their optional pre-treatments and their manufacturer:
- trichlorotris(tetrahydrofuran)vanadium [VCl₃(THF)₃]: prepared as described by Manzer L. E. et al., "Inorganic Synthesis" (1982), Vol. 21, pag. 135-140;
- (methyl)diphenylphosphine (Strem): degree of purity 99%, used as it is;
- (ethyl)diphenylphosphine (Strem): degree of purity 99%, used as it is;
- (*iso*-propyl)diphenylphosphine (Aldrich): degree of purity 97%, used as it is;
- (cyclohexyl)diphenylphosphine (Strem): degree of purity 98%, used as it is;
- triphenylphosphine (Strem): degree of purity 99%, used as it is;
- tri(cyclohexyl)phosphine (Strem): degree of purity 97%, used as it is;
- tri(cyclopentyl)phosphine (Strem): degree of purity ≥ 95%, used as it is;
- di(cyclohexyl)phenylphosphine (Aldrich): degree of purity 95%, used as it is;
- tri(*tert*-butyl)phosphine (Strem): degree of purity 99%, used as it is;
- 1,2-bis(dimethylphosphino)ethane (Strem): degree of purity 98%, used as it is;
- 1,2-bis(diethylphosphino)ethane (Strem): degree of purity 98%, used as it is;
- N,N-bis(diphenylphosphino)amine (Strem): degree of purity min. 98%, used as it is;
- toluene (Fluka): degree of purity > 99.5%, refluxed over sodium (Na) for about 8 hours, then distilled and stored over molecular sieves under nitrogen;
- pentane (Fluka): degree of purity 99%, refluxed over sodium/potassium (Na/K) for about 8 hours, then distilled and stored over molecular sieves under nitrogen;
- heptane (Aldrich): used as it is;
- 1,3-butadiene (Air Liquide): pure, ≥ 99.5%, evaporated from the container before each production, dried by passing it through a molecular sieve packed column and condensed inside the reactor that was pre-cooled to -20°C;
- isoprene (Aldrich): pure, ≥ 99%, refluxed over calcium hydride for 2 hours, then distilled "trap-to-trap" and stored in a nitrogen atmosphere at 4°C, in the fridge;
- methylaluminoxane (MAO) (toluene solution 10% in weight) (Aldrich): used as it is, or in "dry" form (MAO-dry) obtained by removing the free trimethyl-aluminum along with the solvent from said toluene solution under vacuum and drying the residue obtained still under vacuum;
- methanol (Carlo Erba, RPE): used as it is, or optionally anhydrified by distillation on magnesium (Mg);
- hydrochloric acid in 37% aqueous solution (Aldrich): used as it is;
- 1,2-dichlorobenzene (Aldrich): degree of purity 99%, refluxed over calcium hydride (CaH₂) for about 8 hours, then distilled and stored over molecular sieves under nitrogen;
- deuterated tetrachloroethylene (C₂D₂Cl₄) (Acros): used as it is;
- deuterated chloroform (CDCl₃) (Acros): used as it is.

The analysis and characterization methodologies reported below were used.

### Elementary analysis

### a) Determination of vanadium (V)

To determine the quantity in weight of vanadium (V), in the vanadium phosphinic complexes object of the present invention, a precisely weighed aliquot, operating in dry-box under nitrogen flow, of about 30 mg - 50 mg of sample, was placed in an approximately 30 ml platinum crucible, along with a 1 ml mixture of 40% hydrofluoric acid (HF) (Aldrich), 0.25 ml of 96% sulfuric acid (H₂SO₄) and 1 ml of 70% nitric acid (HNO₃) (Aldrich). The crucible was then heated on a hot plate increasing the temperature until white sulfur fumes appeared (about 200°C). The mixture thus obtained was cooled to room temperature (20°C - 25°C), and 1 ml of 70% nitric acid (HNO₃) (Aldrich) was added then it was left again until fumes appeared. After repeating the sequence another two times, a clear, almost colorless, solution was obtained. 1 ml of 70% nitric acid (HNO₃) (Aldrich) and about 15 ml of water were then added, in the cold, then heated to 80°C for about 30 minutes. The sample thus prepared was diluted with MilliQ pure water until it weighed about 50 g, precisely weighed, to obtain a solution on which the instrumental analytical determination was carried out using a Thermo Optek IRIS Advantage Duo ICP-OES (plasma optical emission) spectrometer, for comparison with solutions of known concentration. For this purpose, for every analyte, a calibration curve was prepared in the range 0 ppm - 10 ppm, by measuring solutions of a known titre obtained by dilution by weight of certified solutions.

The solution of sample prepared as above was then diluted again by weight in order to obtain concentrations close to the reference ones, before carrying out spectrophotometric measurement. All the samples were prepared in double quantities. The results was considered acceptable if the individual repeated test data did not have a relative deviation of more than 2% with respect to their mean value.

### b) Determination of chlorine

For said purpose, samples of vanadium phosphinic complexes object of the present invention, about 30 mg - 50 mg, were precisely weighed in 100 ml glass beakers in dry-box under nitrogen flow. 2 g of sodium carbonate (Na₂CO₃) (Aldrich) and, outside the dry-box, 50 ml of MilliQ water, were added. It was brought to the boil on the hot plate, under magnetic stirring, for about 30 minutes. It was left to cool, then 1/5 diluted sulfuric acid (H₂SO₄) (Aldrich) was added, until acid reaction and was then titrated with 0.1 N silver nitrate (AgNO₃) (Aldrich) with a potentiometric titrator.

### c) Determination of carbon, hydrogen and nitrogen

The determination of carbon, hydrogen and nitrogen, in the vanadium phosphinic complexes object of the present invention, was carried out through a Carlo Erba automatic analyzer Mod. 1106.

### X-ray diffraction (XRD)

For this purpose, samples of the vanadium phosphinic complexes object of the present invention, of about 1 g, were loaded onto the porous septum of a hot extractor for solids and continuously extracted with boiling pentane for about 2 days obtaining crystalline products (individual crystals) that were analyzed through X-ray diffraction (XRD) using a Bruker AXS Smart Apex II diffractometer equipped with CCD detector and an Oxford Cryostram unit for nitrogen flow assembled at the base of the goniometer to allow data to be collected at different temperatures, i.e. in a temperature range ranging from 100 K (-173.15°C) to 300 K (26.85°C): the operating conditions are reported in Table 1 and in Table 2.

Table 1 and Table 2 also report the crystallographic data of the samples analyzed.

### ¹³C-HMR and ¹H-HMR spectra

The ¹³C-HMR and ¹H-HMR spectra were recorded using a nuclear magnetic resonance spectrometer mod. Bruker Avance 400, using deuterated tetrachloroethylene (C₂D₂Cl₄) at 103°C, and hexamethyldisiloxane (HDMS) (Aldrich) as internal standard, or using deuterated chloroform (CDCl₃), at 25°C, and tetramethylsilane (TMS) (Aldrich) as internal standard. For this purpose, polymeric solutions were used with concentrations equal to 10% by weight with respect to the total weight of the polymeric solution.

The microstructure of the polymers was determined through the analysis of the aforementioned spectra on the basis of what reported in literature by Mochel, V. D., in "Journal of Polymer Science Part A-1: Polymer Chemistry" (1972), Vol. 10, Issue 4, pag. 1009-1018, for polybutadiene, and by Sato H. et al., in "Journal of Polymer Science: Polymer Chemistry Edition" (1979), Vol. 17, Issue 11, pag. 3551-3558, for polyisoprene.

### FT-IR spectra

The FT-IR spectra were recorded through Thermo Nicolet Nexus 670 and Bruker IFS 48 spectrophotometers.

The FT-IR spectra of the polymers were obtained from polymeric films on potassium bromide (KBr) tablets, said films being obtained through the deposition of a solution in hot 1,2-dichlorobenzene of the polymer to be analyzed. The concentration of the polymeric solutions analyzed was equal to 10% by weight with respect to the total weight of the polymeric solution.

### Determination of the molecular weight

The determination of the molecular weight (MW) of the polymers obtained was carried out through GPC (Gel Permeation Chromatography) operating under the following conditions:
- Agilent 1100 pump;
- Agilent 1100 I.R. detector;
- PL Mixed-A columns;
- solvent/eluent: tetrahydrofuran (THF) (Aldrich);
- flow: 1ml/min;
- temperature: 25°C;
- molecular mass calculation: Universal Calibration method.

The weight-average molecular weight (M_{w}) and the Polydispersion Index (PDI) corresponding to the ratio M_{w}/Mₙ (Mₙ = number-average molecular weight), are reported.

### EXAMPLE 1

### Synthesis of VCl₃(PMePh₂)₂ [sample MM261]

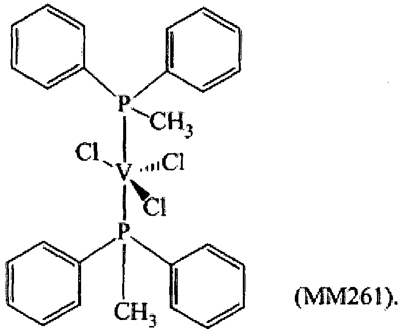

1.02 g (2.75x10⁻³ moles) of trichlorotris(tetrahydrofuran)vanadium. [VCl₃(THF)₃], 15 ml of toluene and, subsequently, 2.19 g (1.10x10⁻² moles) of (methyl)diphenylphosphine (P/V molar ratio = 4) were placed into a 100 ml tailed flask. The mixture obtained was left, under vigorous stirring, at room temperature, for 15 minutes and, then, heated under reflux for 3 hours. The suspension obtained was filtered in the hot (60°C) and the fraction collected was concentrated, under vacuum, at room temperature. Subsequently, drop by drop, under stirring, about 50 ml of pentane were added, obtaining the precipitation of a purple powder. After about 3 hours, everything was filtered and the solid light purple residue obtained was washed with pentane (50 ml) and dried, under vacuum, at room temperature, obtaining 1.476 g (conversion with respect to starting [VCl₃(THF)₃] = 96.3%) of complex VCl₃(PMePh₂)₂ (molecular weight = 557.53 gxmol⁻¹).
Elementary analysis [found (calculated)] C: 56.20% (55.99%); H: 4.60% (4.70%); Cl: 19.20% (19.07%); P: 11.10% (11.11%); V: 9.20% (9.13%).

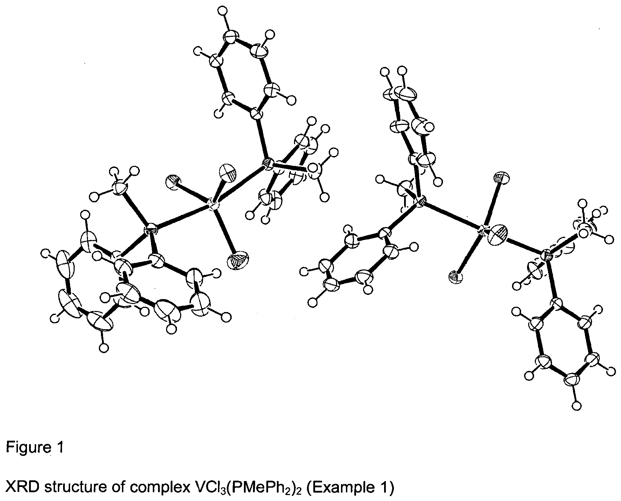

Figure 1 reports the XRD structure of the VCl₃(PMePh₂)₂ complex obtained.

Table 1 and Table 2 report the crystallographic data of the VCl₃(PMePh₂)₂ complex obtained.

### EXAMPLE 2

### Synthesis of VCl₃(PEtPh₂)₂ [sample G12981

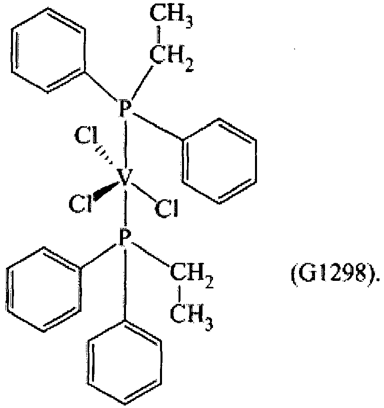

1.28 g (3.42x10⁻³ moles) of trichlorotris(tetrahydrofuran)vanadium [VCl₃(THF)₃], 15 ml of toluene and, subsequently, 2.90 g (1.37x10⁻² moles) of (ethyl)diphenylphosphine (P/V molar ratio = 4) were placed into a 100 ml tailed flask. The mixture obtained was left, under vigorous stirring, at room temperature, for 15 minutes and, then, heated under reflux for 1 hour. The suspension obtained was filtered in the hot (60°C) and the fraction collected was concentrated, under vacuum, at room temperature. Subsequently, drop by drop, under stirring, about 50 ml of pentane were added, obtaining the precipitation of a purple/gray powder. After about 3 hours, everything was filtered and the solid gray/pink residue obtained was washed with pentane (50 ml) and dried, under vacuum, at room temperature, obtaining 1.8226 g (conversion with respect to starting [VCl₃(THF)₃] = 91.0%) of complex VCl₃(PEtPh₂)₂ (molecular weight = 585.79 gxmol⁻¹).
Elementary analysis [found (calculated)] C: 57.40% (57.41%); H: 5.10% (5.16%); Cl: 18.20% (18.16%); P: 10.07% (10.58%); V: 8.60% (8.70%).

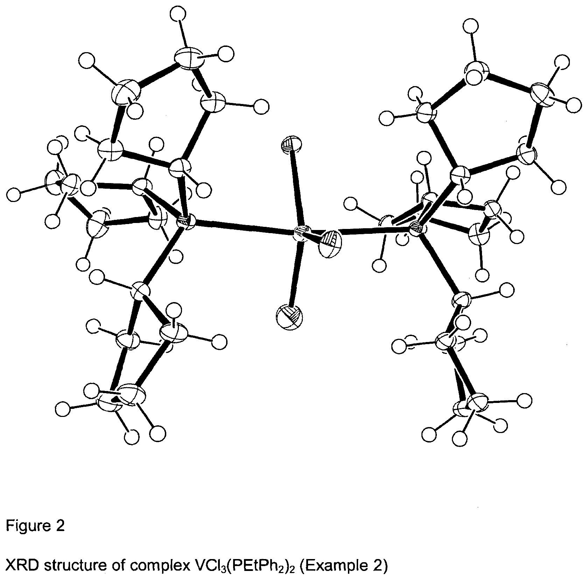

Figure 2 reports the XRD structure of the VCl₃(PEtPh₂)₂ complex obtained.

Table 1 and Table 2 report the crystallographic data of the VCl₃(PEtPh₂)₂ complex obtained.

### EXAMPLE 3

### Synthesis of VCl₃(PⁱPrPh₂)₂ [sample G13251

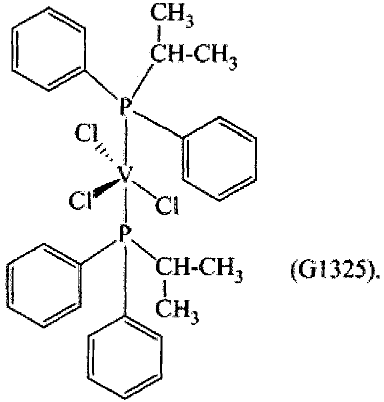

1.28 g (3.42x10⁻³ moles) of trichlorotris(tetrahydrofuran)vanadium [VCl₃(THF)₃], 15 ml of toluene and, subsequently, 2.90 g (1.37x10⁻² moles) of (*iso*-propyl)diphenylphosphine (P/V molar ratio = 4) were placed into a 100 ml tailed flask. The mixture obtained was left, under vigorous stirring, at room temperature, for 15 minutes and, then, heated under reflux for 1 hour. The suspension obtained was filtered in the hot (60°C) and the fraction collected was concentrated, under vacuum, at room temperature. Subsequently, drop by drop, under stirring, about 50 ml of pentane were added, obtaining the precipitation of a purple/gray powder. After about 3 hours, everything was filtered and the solid gray/pink residue obtained was washed with pentane (50 ml) and dried, under vacuum, at room temperature, obtaining 1.8226 g (conversion with respect to starting [VCl₃(THF)₃] = 91.0%) of complex VCl₃(PⁱPh2)₂ (molecular weight = 585.79 gxmol⁻¹).
Elementary analysis [found (calculated)] C: 57.40% (57.41%); H: 5.10% (5.16%); Cl: 18.20% (18.16%); P: 10.07% (10.58%); V: 8.60% (8.70%).

### EXAMPLE 4

### Synthesis of VCl₃(PCyPh₂)₂ [sample MM3001

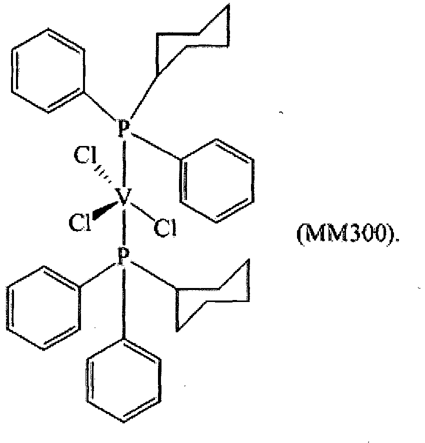

0.86 g (2.30x10⁻³ moles) of trichlorotris(tetrahydrofuran)vanadium [VCl₃(THF)₃], 20 ml of toluene and, subsequently, 2.40 g (9.0x10⁻³ moles) of diphenyl(cyclohexyl)phosphine (P/V molar ratio = 4) were placed into a 100 ml tailed flask. The mixture obtained was left, under vigorous stirring, at room temperature, for 60 minutes and, then, heated under reflux for 1 hour. The suspension obtained was filtered in the hot (60°C) and the fraction collected was concentrated, under vacuum, at room temperature. Subsequently, drop by drop, under stirring, about 50 ml of pentane were added, obtaining the precipitation of a dark powder. After about 3 hours, everything was filtered and the solid light blue/gray residue obtained was washed with pentane (50 ml) and dried, under vacuum, at room temperature, obtaining 1.30 g (conversion with respect to starting [VCl₃(THF)₃] = 81.4%) of complex VCl₃(PCyPh₂)₂ (molecular weight = 693.97 gxmol⁻¹).
Elementary analysis [found (calculated)] C: 62.40% (62.31%); H: 6.30% (6.10%); Cl: 15.50% (15.33%); P: 9.0% (8.93%); V: 7.20% (7.34%).

### EXAMPLE 5

### Synthesis of VCl₃(PPh₃)₂ [sample MM295]

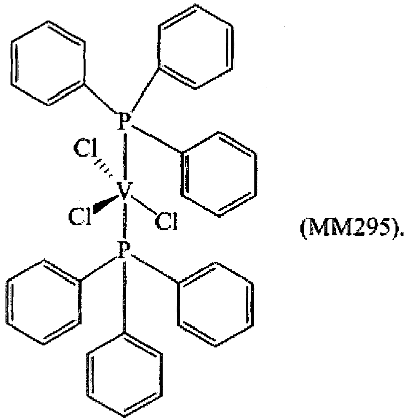

1.0 g (2.66x10⁻³ moles) of trichlorotris(tetrahydrofuran)vanadium [VCl₃(THF)₃], 10 ml of toluene and, subsequently, 2.80 g (1.06x10⁻² moles) of triphenylphosphine (P/V molar ratio = 4) were placed into a 100 ml tailed flask. The mixture obtained was left, under vigorous stirring, at room temperature, for 60 minutes and, then, heated under reflux for 3 hours. The suspension obtained was filtered in the hot (60°C) and the fraction collected was concentrated, under vacuum, at room temperature. Subsequently, drop by drop, under stirring, about 50 ml of pentane were added, obtaining the precipitation of a dark powder. After about 3 hours, everything was filtered and the solid very dark lilac residue obtained was washed with pentane (50 ml) and dried, under vacuum, at room temperature, obtaining 1.50 g (conversion with respect to starting [VCl₃(THF)₃] = 82.7%) of complex VCl₃(PPh₃)₂ (molecular weight = 681.87 gxmol⁻¹).
Elementary analysis [found (calculated)] C: 63.30% (63.41%); H: 4.50% (4.43%); Cl: 15.50% (15.60%); P: 9.0% (9.08%); V: 7.60% (7.47%).

### EXAMPLE 6

### Synthesis of VCl₃(PCy₃)₂ [sample MM370]

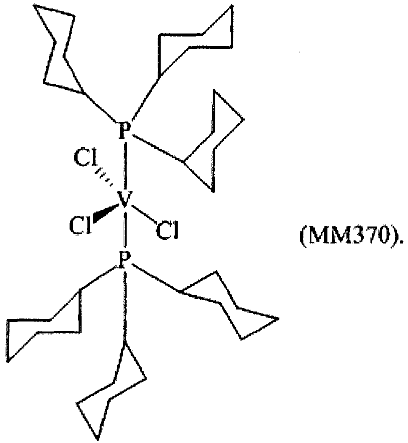

0.827 g (2.20x10⁻³ moles) of trichlorotris(tetrahydrofuran)vanadium [VCl₃(THF)₃], 18 ml of toluene and, subsequently, 2.47 g (8.82x10⁻² moles) of tri(cyclohexyl)phosphine (P/V molar ratio = 4) were placed into a 100 ml tailed flask. The mixture obtained was left, under vigorous stirring, at room temperature, for 24 hours. The suspension obtained was filtered in the hot (60°C) and the fraction collected was concentrated, under vacuum, at room temperature. Subsequently, drop by drop, under stirring, about 50 ml of pentane were added, obtaining the precipitation of a dark powder. After about 3 hours, everything was filtered and the solid purple residue obtained was washed with pentane (50 ml) and dried, under vacuum, at room temperature, obtaining 0.387 g (conversion with respect to starting [VCl₃(THF)₃] = 25.6%) of complex VCl₃(PCy₃)₂ (molecular weight = 718.16 gxmol^{- 1}).
Elementary analysis [found (calculated)] C: 60.30% (60.21%); H: 9.20% (9.26%); Cl: 14.70% (14.81%); P: 8.70% (8.63%); V: 7.30% (7.09%).

### EXAMPLE 7

### Synthesis of VCl₃(PCyp₃)₂ [sample G12861

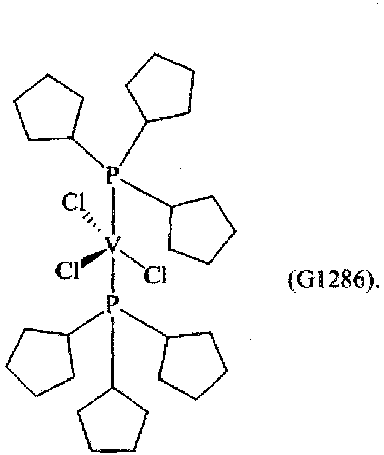

0.88 g (2.34x10⁻³ moles) of trichlorotris(tetrahydrofuran)vanadium [VCl₃(THF)₃], 10 ml of toluene and, subsequently, 2.23 g (9.36x10⁻³ moles) of tri(cyclopentyl)phosphine (P/V molar ratio = 4) were placed into a 100 ml tailed flask. The mixture obtained was left, under vigorous stirring, at room temperature, for 15 minutes and, then, heated under reflux for 3 hours. The suspension obtained was filtered in the hot (60°C) and the fraction collected was concentrated, under vacuum, at room temperature. Subsequently, drop by drop, under stirring, about 50 ml of pentane were added, obtaining the precipitation of a purple powder. After about 3 hours, everything was filtered and the solid purple residue obtained was washed with pentane (50 ml) and dried, under vacuum, at room temperature, obtaining 0.802 g (conversion with respect to starting [VCl₃(THF)₃] = 54.1%) of complex VCl₃(PCyp₃)₂ (molecular weight = 634.0 gxmol⁻¹).
Elementary analysis [found (calculated)] C: 56.90% (56.83%); H: 8.70% (8.59%); Cl: 16.70% (16.78%); P: 9.80% (9.77%); V: 8.0% (8.03%).

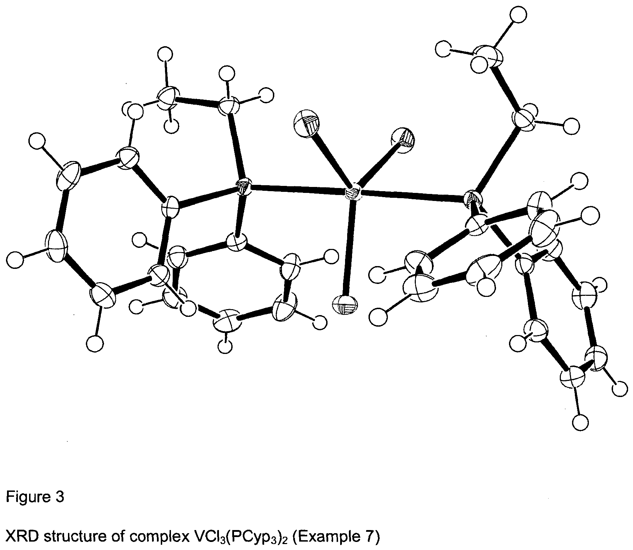

Figure 3 reports the XRD structure of the VCl₃(PCyp₃)₂ complex obtained.

Table 1 and Table 2 report the crystallographic data of the VCl₃(PCyp₃)₂ complex obtained.

### EXAMPLE 8

### Synthesis of VCl₃(PCy₂H)₂ [sample G13031

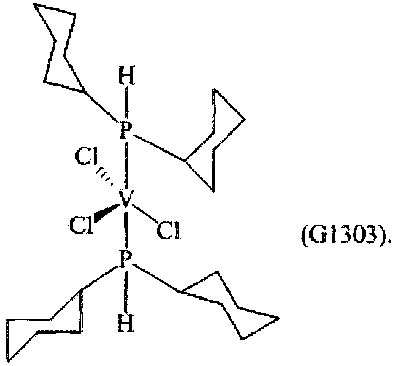

0.955 g (2.0x10⁻³ moles) of trichlorotris(tetrahydrofuran)vanadium [VCl₃(THF)₃], 10 ml of toluene and, subsequently, 1.5863 g (8.0x10⁻³ moles) of di(cyclohexyl)phosphine (P/V molar ratio = 4) were placed into a 100 ml tailed flask. The mixture obtained was left, under vigorous stirring, at room temperature, for 60 minutes and, then, heated under reflux for 3 hours. The suspension obtained was filtered in the hot (60°C) and the fraction collected was concentrated, under vacuum, at room temperature. Subsequently, drop by drop, under stirring, about 50 ml of pentane were added, obtaining the precipitation of a dark powder. After about 3 hours, everything was filtered and the solid brownish residue obtained was washed with pentane (50 ml) and dried, under vacuum, at room temperature, obtaining 0.3768 g (conversion with respect to starting [VCl₃(THF)₃] = 42.0%) of complex VCl₃(PCy₂H)₂ (molecular weight = 553.87 gxmol⁻¹).
Elementary analysis [found (calculated)] C: 52.20% (52.04%); H: 8.50% (8.37%); Cl: 19.30% (19.20%); P: 11:10% (11.18%); V: 9.40% (9.20%).

### EXAMPLE 9

### Synthesis of VCl₃(P^{t}Bu₃)₂ [sample G1299]

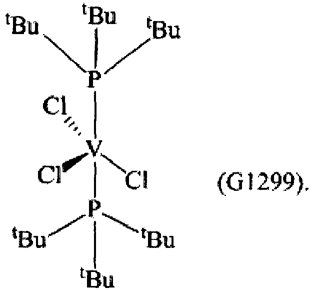

0.466 g (2.16x10⁻³ moles) of trichlorotris(tetrahydrofuran)vanadium [VCl₃(THF)₃], 4 ml of toluene and, subsequently, 1.74 g (8.64x10⁻² moles) of tri(*tert*-butyl)phosphine (P/V molar ratio = 4) were placed into a 100 ml tailed flask. The mixture obtained was left, under vigorous stirring, at room temperature, for 15 minutes and, then, heated under reflux for 3 hours. The suspension obtained was filtered in the hot (60°C) and the fraction collected was concentrated, under vacuum, at room temperature. Subsequently, drop by drop, under stirring, about 50 ml of pentane were added, obtaining the precipitation of a purple/gray powder. After about 3 hours, everything was filtered and the solid gray/violet residue obtained was washed with pentane (50 ml) and dried, under vacuum, at room temperature, obtaining 0.3768 g (conversion with respect to starting [VCl₃(THF)₃] = 31.0%) of complex VCl₃(P^{t}Bu₃)₂ (molecular weight = 561.93 gxmol⁻¹).
Elementary analysis [found (calculated)] C: 51.50% (51.30%); H: 9.50% (9.69%); Cl: 19.10% (18.93%); P: 11.20% (11.02%); V: 9.30% (9.07%).

### EXAMPLE 10

### Synthesis of VCl₃(dmpe) [sample G1275]

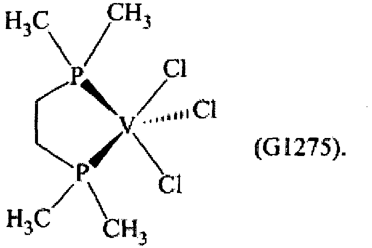

1.25 g (3.33x10⁻³ moles) of trichlorotris(tetrahydrofuran)vanadium [VCl₃(THF)₃], 14 ml of toluene and, subsequently, 1.0 g (0.68x10⁻² moles) of 1,2-bis(dimethylphosphino)ethane (P/V molar ratio = 2) were placed into a 100 ml tailed flask. The mixture obtained was left, under vigorous stirring, at room temperature, for 15 minutes and, then, heated under reflux for 3 hours. The suspension obtained was filtered in the hot (60°C) and the fraction collected was concentrated, under vacuum, at room temperature. Subsequently, drop by drop, under stirring, about 50 ml of pentane were added, obtaining the precipitation of a very fine powder. After about 3 hours, everything was filtered and the solid rather dark residue obtained was washed with pentane (50 ml) and dried, under vacuum, at room temperature, obtaining 0.895 g (conversion with respect to starting [VCl₃(THF)₃] = 87.6%) of complex VCl₃(dmpe) (molecular weight = 307.44 gxmol⁻¹).
Elementary analysis [found (calculated)] C: 23.20% (23.44%); H: 5.30% (5.25%); Cl: 34.40% (34.60%); P: 20.40% (20.15%); V: 16.80% (16.57%).

### EXAMPLE 11

### Synthesis of VCl₃(depe) [sample G12741

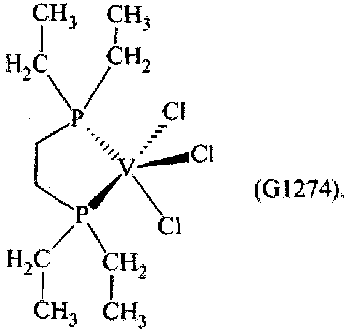

0.443 g (1.22x10⁻³ moles) of trichlorotris(tetrahydrofuran)vanadium [VCl₃(THF)₃], 5 ml of toluene and, subsequently, 1.0 g (4.90x10⁻³ moles) of 1,2-bis(diethylphosphino)ethane (P/V molar ratio = 4) were placed into a 100 ml tailed flask. The mixture obtained was left, under vigorous stirring, at room temperature, for 15 minutes and, then, heated under reflux for 3 hours. The suspension obtained was filtered in the hot (60°C) and the fraction collected was concentrated, under vacuum, at room temperature. Subsequently, drop by drop, under stirring, about 25 ml of pentane were added, obtaining the precipitation of a very fine powder. After about 3 hours, everything was filtered and the solid green residue obtained was washed with pentane (50 ml) and dried, under vacuum, at room temperature, obtaining 0.411 g (conversion with respect to starting [VCl₃(THF)₃] = 92.6%) of complex VCl₃(depe) (molecular weight = 363.55 gxmol⁻¹).
Elementary analysis [found (calculated)] C: 32.90% (33.04%); H: 6.40% (6.55%); Cl: 29.56% (29.26%); P: 17.24% (17.04%); V: 14.03% (14.01%).

### EXAMPLE 12

### Synthesis of VCl₃(dppa) [sample G1281]

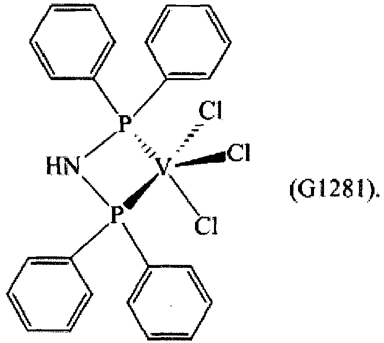

0.748 g (2.09x10⁻³ moles) of trichlorotris(tetrahydrofuran)vanadium [VCl₃(THF)₃], 10 ml of toluene and, subsequently, 1.444 g (3.75x10⁻³ moles) of N,N-bis(diphenylphosphino)-amine (P/V molar ratio = 1.8) were placed into a 100 ml tailed flask. The mixture obtained was left, under vigorous stirring, at room temperature, for 15 minutes and, then, heated under reflux for 2 hours. The suspension obtained was filtered in the hot (60°C) and the fraction collected was concentrated, under vacuum, at room temperature. Subsequently, drop by drop, under stirring, about 50 ml of pentane were added, obtaining the precipitation of a very fine powder. After about 3 hours, everything was filtered and the solid mustard residue obtained was washed with pentane (50 ml) and dried, under vacuum, at room temperature, obtaining 0.356 g (conversion with respect to starting [VCl₃(THF)₃] = 31.4%) of complex VCl₃(dppa) (molecular weight = 542.68 gxmol⁻¹).
Elementary analysis [found (calculated)] C: 53.23% (53.12%); H: 3.90% (3.90%); Cl: 19.88% (19.60%); N: 2.75% (2.58%); P: 11.50% (11.42%); V: 9.50% (9.39%).

### EXAMPLE 13 (MM267)

2 ml of 1,3-butadiene equal to about 1.4 g were condensed, in the cold (-20°C), in a 25 ml test tube. Subsequently, 9.14 ml of toluene were added and the temperature of the solution thus obtained was brought to 20°C. Then, methylaluminoxane (MAO) in toluene solution (1.26 ml; 2.0x10⁻³ moles, equal to about 1.45 g) was added and, subsequently, the VCl₃(PMePh₂)₂ complex [sample MM261] (5.6 ml of toluene suspension at a concentration of 2 mg/ml; 2x10⁻⁵ moles, equal to about 11.2 mg) obtained as described in Example 1. Everything was kept, under magnetic stirring, at 20°C, for 72 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.241 g of polybutadiene with mixed cis/trans/1,2 structure having a 1,4-trans and 1,4-cis unit content of 77.2%: further characteristics of the process and of the polybutadiene obtained are reported in Table 3.

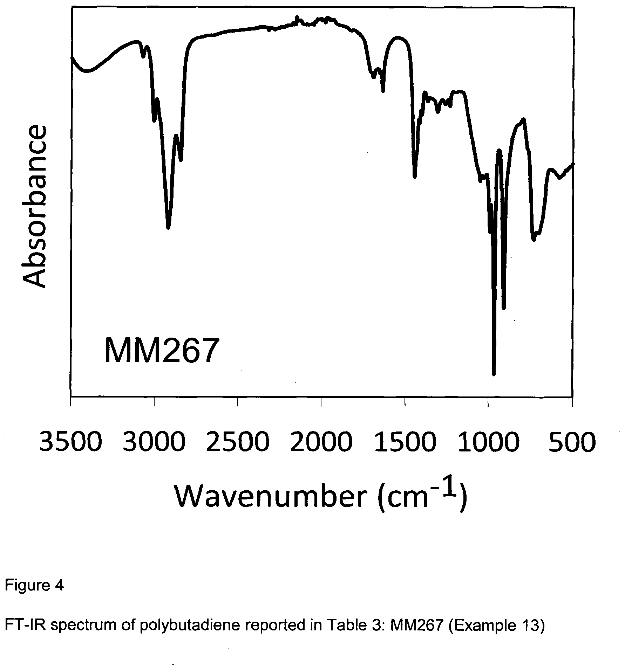

Figure 4 reports the FT-IR spectrum of the polybutadiene obtained.

### EXAMPLE 14 (MM268)

2 ml of 1,3-butadiene equal to about 1.4 g were condensed, in the cold (-20°C), in a 25 ml test tube. Subsequently, 4.1 ml of toluene were added and the temperature of the solution thus obtained was brought to 20°C. Then, methylaluminoxane (MAO) in toluene solution (6.3 ml; 1x10⁻² moles, equal to about 0.58 g) was added and, subsequently, the VCl₃(PMePh₂)₂ complex [sample MM261] (5.6 ml of toluene suspension at a concentration of 2 mg/ml; 2x10⁻⁵ moles, equal to about 11.2 mg) obtained as described in Example 1. Everything was kept, under magnetic stirring, at 20°C, for 4.5 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.203 g of polybutadiene with mixed cis/trans/1,2 structure having a 1,4-trans and 1,4-cis unit content of 85.8%: further characteristics of the process and of the polybutadiene obtained are reported in Table 3.

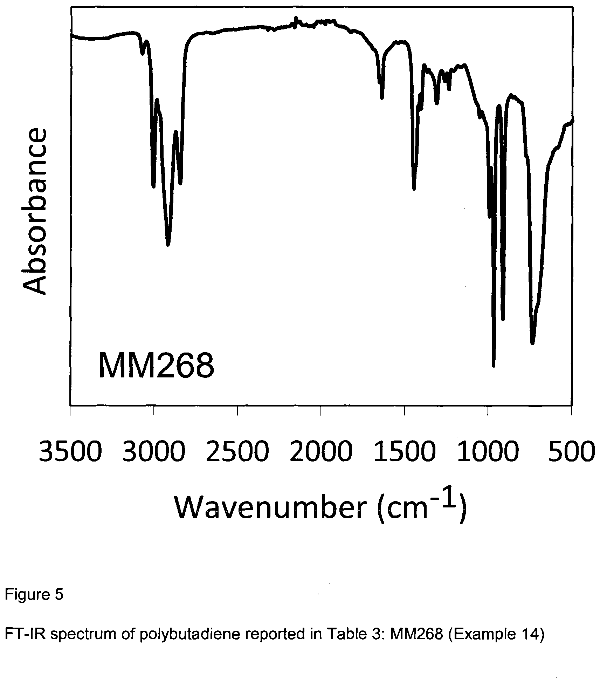

Figure 5 reports the FT-IR spectrum of the polybutadiene obtained.

### EXAMPLE 15 (MM281)

2 ml of 1,3-butadiene equal to about 1.4 g were condensed, in the cold (-20°C), in a 25 ml test tube. Subsequently, 11.6 ml of toluene were added and the temperature of the solution thus obtained was brought to 20°C. Then, methylaluminoxane-dry (MAO-dry) in toluene solution (1.6 ml; 2.5x10⁻³ moles, equal to about 0.145 g) was added and, subsequently, the VCl₃(PMePh₂)₂ complex [sample MM261] (2.8 ml of toluene suspension at a concentration of 2 mg/ml; 1x10⁻⁵ moles, equal to about 5.6 mg) obtained as described in Example 1. Everything was kept, under magnetic stirring, at 20°C, for 5 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.498 g of polybutadiene with mixed cis/trans/1,2 structure having a 1,4-trans and 1,4-cis unit content of 60%: further characteristics of the process and of the polybutadiene obtained are reported in Table 3.

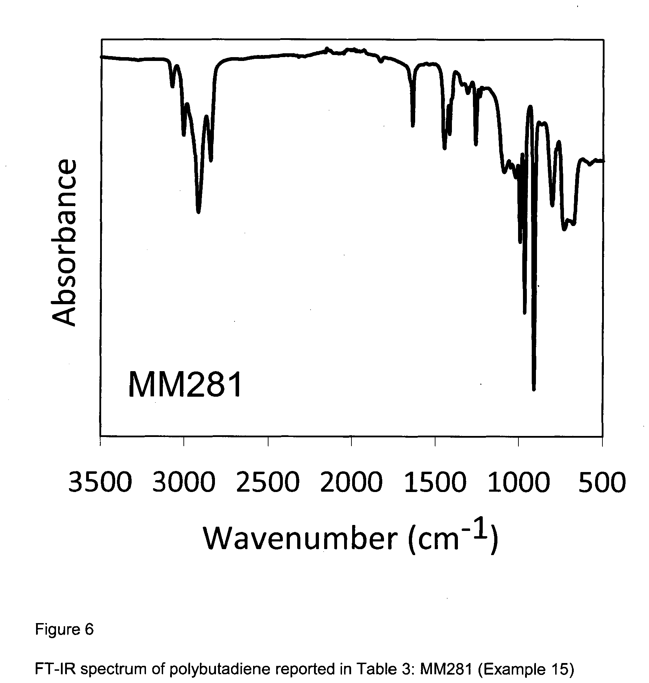

Figure 6 reports the FT-IR spectrum of the polybutadiene obtained.

### EXAMPLE 16 (MM275)

2 ml of 1,3-butadiene equal to about 1.4 g were condensed, in the cold (-20°C), in a 25 ml test tube. Subsequently, 7 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PMePh₂)₂ complex [sample MM261] (2.8 ml of toluene suspension at a concentration of 2 mg/ml; 1x10⁻⁵ moles, equal to about 5.6 mg) obtained as described in Example 1. Everything was kept, under magnetic stirring, at 20°C, for 2 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.845 g of polybutadiene with mixed cis/trans/1,2 structure having a 1,4-trans and 1,4-cis unit content of 74.8%: further characteristics of the process and of the polybutadiene obtained are reported in Table 3.

### EXAMPLE 17 (G1282)

2 ml of 1,3-butadiene equal to about 1.4 g were condensed, in the cold (-20°C), in a 25 ml test tube. Subsequently, 7 ml of toluene were added and the temperature of the solution thus obtained was brought to -30°C. Then, methylaluminoxane-dry (MAO-dry) in toluene solution (6.3 ml; 1x10⁻² moles, equal to about 0.58 g) was added and, subsequently, the VCl₃(PMePh₂)₂ complex [sample MM261] (2.8 ml of toluene suspension at a concentration of 2 mg/ml; 1x10⁻⁵ moles, equal to about 5.6 mg) obtained as described in Example 1. Everything was kept, under magnetic stirring, at -30°C, for 24 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.364 g of polybutadiene with prevalently 1,4-trans structure having a 1,4-trans unit content of 95.1%: further characteristics of the process and of the polybutadiene obtained are reported in Table 3.

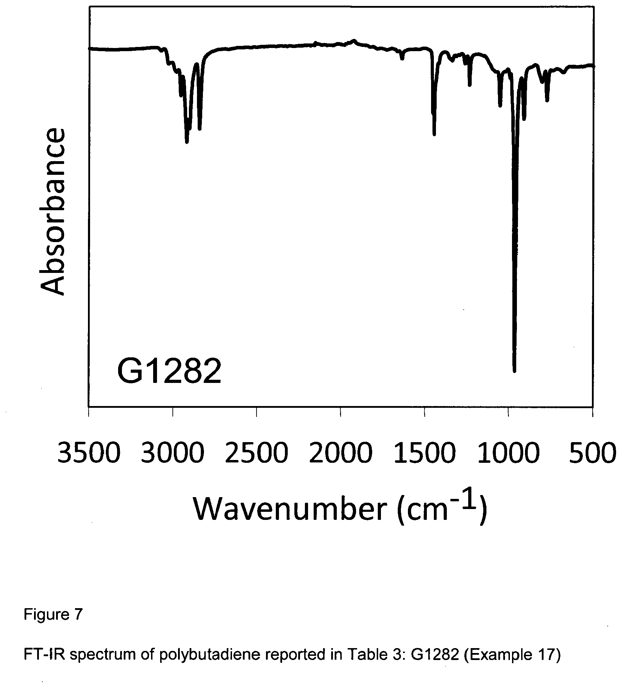

Figure 7 reports the FT-IR spectrum of the polybutadiene obtained.

### EXAMPLE 18 (MM319)

2 ml of 1,3-butadiene equal to about 1.4 g were condensed, in the cold (-20°C), in a 25 ml test tube. Subsequently, 6.75 ml of toluene were added and the temperature of the solution thus obtained was brought to 20°C. Then, methylaluminoxane (MAO) in toluene solution (6.3 ml; 1x10⁻² moles, equal to about 0.58 g) was added and, subsequently, the VCl₃(PEtPh₂)₂ complex [sample G1298] (2.95 ml of toluene suspension at a concentration of 2 mg/ml; 1x10⁻⁵ moles, equal to about 5.9 mg) obtained as described in Example 2. Everything was kept, under magnetic stirring, at 20°C, for 20 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.364 g of polybutadiene with mixed cis/trans/1,2 structure having a 1,4-trans and 1,4-cis unit content of 85.4%: further characteristics of the process and of the polybutadiene obtained are reported in Table 3.

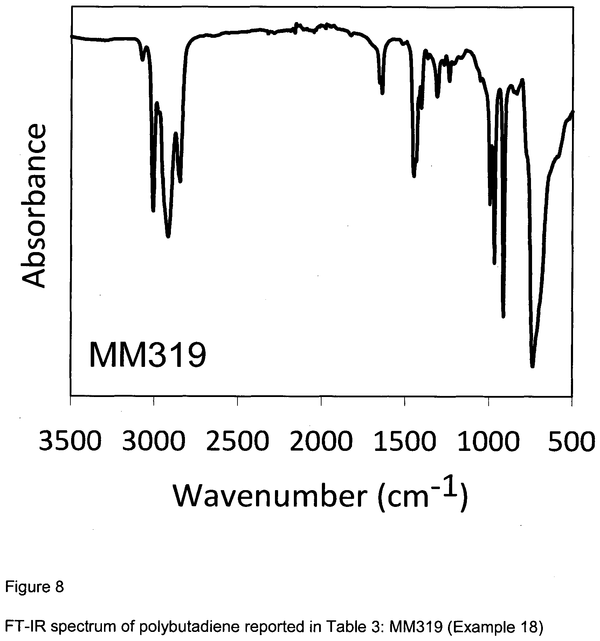

Figure 8 reports the FT-IR spectrum of the polybutadiene obtained.

### EXAMPLE 19 (MM320)

2 ml of 1,3-butadiene equal to about 1.4 g were condensed, in the cold (-20°C), in a 25 ml test tube. Subsequently, 6.75 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PEtPh₂)₂ complex [sample G1298] (2.95 ml of toluene suspension at a concentration of 2 mg/ml; 1x10⁻⁵ moles, equal to about 5.9 mg) obtained as described in Example 2. Everything was kept, under magnetic stirring, at 20°C, for 3 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.815 g of polybutadiene with mixed cis/trans/1,2 structure having a 1,4-trans and 1,4-cis unit content of 71.3%: further characteristics of the process and of the polybutadiene obtained are reported in Table 3.

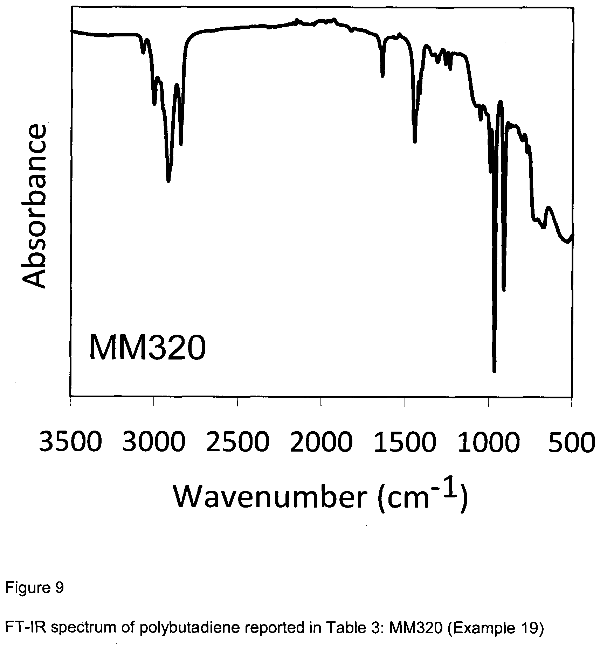

Figure 9 reports the FT-IR spectrum of the polybutadiene obtained.

### EXAMPLE 20 (MM393)

2 ml of 1,3-butadiene equal to about 1.4 g were condensed, in the cold (-20°C), in a 25 ml test tube. Subsequently, 9.9 ml of toluene were added and the temperature of the solution thus obtained was brought to 20°C. Then, methylaluminoxane-dry (MAO-dry) in toluene solution (3.15 ml; 5x10⁻³ moles, equal to about 0.29 g) was added and, subsequently, the VCl₃(PEtPh₂)₂ complex [sample G1298] (2.95 ml of toluene suspension at a concentration of 2 mg/ml; 1x10⁻⁵ moles, equal to about 5.9 mg) obtained as described in Example 2. Everything was kept, under magnetic stirring, at 20°C, for 2.5 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1.17 g of polybutadiene with mixed cis/trans/1,2 structure having a 1,4-trans and 1,4-cis unit content of 62.7%: further characteristics of the process and of the polybutadiene obtained are reported in Table 3.

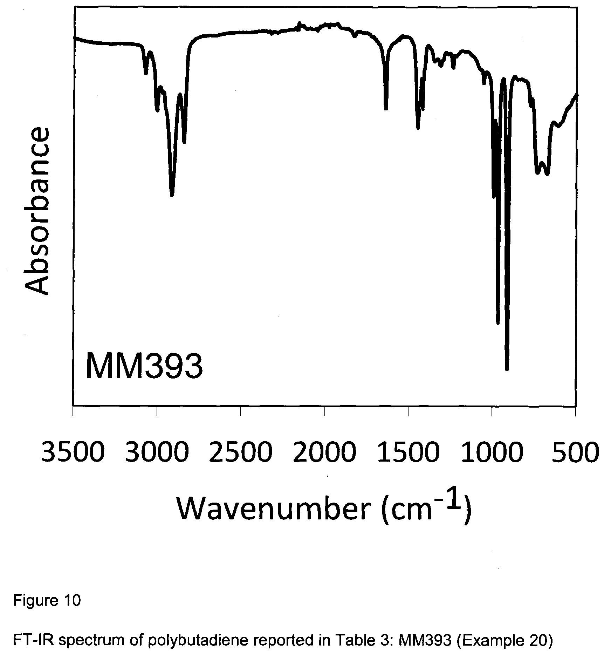

Figure 10 reports the FT-IR spectrum of the polybutadiene obtained.

### EXAMPLE 21 (MM394)

2 ml of 1,3-butadiene equal to about 1.4 g were condensed, in the cold (-20°C), in a 25 ml test tube. Subsequently, 12.4 ml of toluene were added and the temperature of the solution thus obtained was brought to 20°C. Then, methylaluminoxane-dry (MAO-dry) in toluene solution (0.63 ml; 1x10⁻³ moles, equal to about 0.058 g) was added and, subsequently, the VCl₃(PEtPh₂)₂ complex [sample G1298] (2.95 ml of toluene suspension at a concentration of 2 mg/ml; 1x10⁻⁵ moles, equal to about 5.9 mg) obtained as described in Example 2. Everything was kept, under magnetic stirring, at 20°C, for 5 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.483 g of polybutadiene with mixed cis/trans/1,2 structure having a 1,4-trans and 1,4-cis unit content of 61.7%: further characteristics of the process and of the polybutadiene obtained are reported in Table 3.

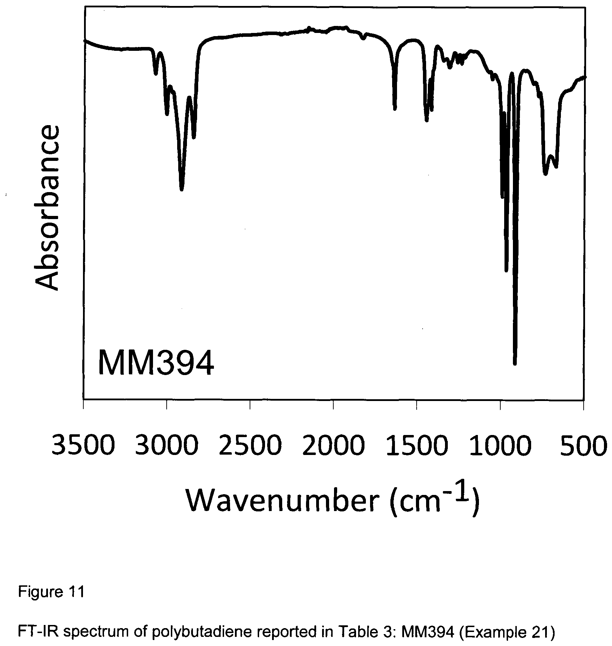

Figure 11 reports the FT-IR spectrum of the polybutadiene obtained.

### EXAMPLE 22 (MM395)

2 ml of 1,3-butadiene equal to about 1.4 g were condensed, in the cold (-20°C), in a 25 ml test tube. Subsequently, 9.9 ml of toluene were added and the temperature of the solution thus obtained was brought to 20°C. Then, methylaluminoxane (MAO) in toluene solution (3.15 ml; 5x10⁻³ moles, equal to about 0.29 g) was added and, subsequently, the VCl₃(PEtPh₂)₂ complex [sample G1298] (2.95 ml of toluene suspension at a concentration of 2 mg/ml; 1x10⁻⁵ moles, equal to about 5.9 mg) obtained as described in Example 2. Everything was kept, under magnetic stirring, at 20°C, for 24 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.281 g of polybutadiene with mixed cis/trans/1,2 structure having a 1,4-trans and 1,4-cis unit content of 81.8%: further characteristics of the process and of the polybutadiene obtained are reported in Table 3.

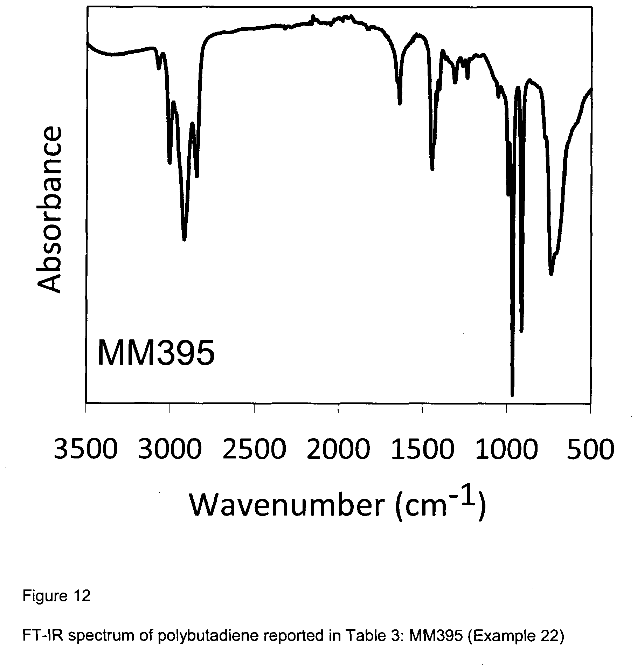

Figure 12 reports the FT-IR spectrum of the polybutadiene obtained.

### EXAMPLE 23 (MM396)

2 ml of 1,3-butadiene equal to about 1.4 g were condensed, in the cold (-20°C), in a 25 ml test tube. Subsequently, 12.4 ml of toluene were added and the temperature of the solution thus obtained was brought to 20°C. Then, methylaluminoxane (MAO) in toluene solution (0.63 ml; 1x10⁻² moles, equal to about 0.058 g) was added and, subsequently, the VCl₃(PEtPh₂)₂ complex [sample G1298] (2.95 ml of toluene suspension at a concentration of 2 mg/ml; 1x10⁻⁵ moles, equal to about 5.9 mg) obtained as described in Example 2. Everything was kept, under magnetic stirring, at 20°C, for 24 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.203 g of polybutadiene with mixed cis/trans/1,2 structure having a 1,4-trans and 1,4-cis unit content of 80.2%: further characteristics of the process and of the polybutadiene obtained are reported in Table 3.

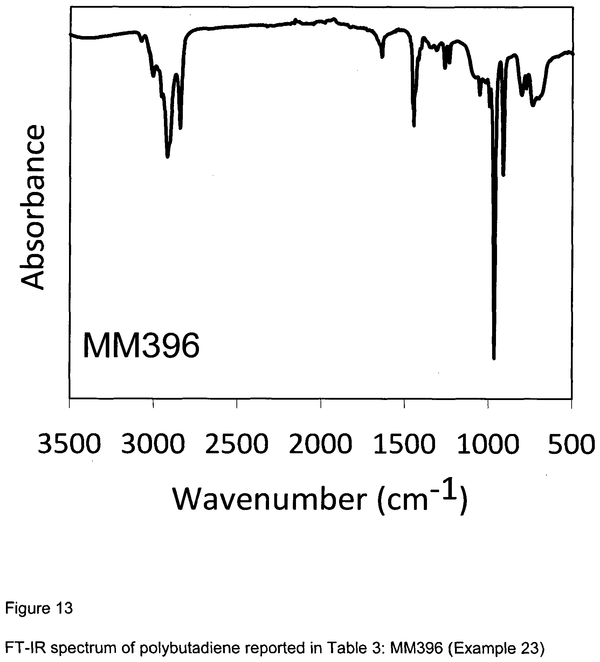

Figure 13 reports the FT-IR spectrum of the polybutadiene obtained.

### EXAMPLE 24 (MM398)

2 ml of 1,3-butadiene equal to about 1.4 g were condensed, in the cold (-20°C), in a 25 ml test tube. Subsequently, 9.9 ml of 1,2-dichlorobenzene were added and the temperature of the solution thus obtained was brought to 20°C. Then, methylaluminoxane-dry (MAO-dry) in 1,2-dichlorobenzene solution (3.15 ml; 5x10⁻³ moles, equal to about 0.29 g) was added and, subsequently, the VCl₃(PEtPh₂)₂ complex [sample G1298] (2.95 ml of 1,2-dichlorobenzene solution at a concentration of 2 mg/ml; 1x10⁻⁵ moles, equal to about 5.9 mg) obtained as described in Example 2. Everything was kept, under magnetic stirring, at 20°C, for 2.16 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.778 g of polybutadiene with mixed cis/trans/1,2 structure having a 1,4-trans and 1,4-cis unit content of 75.5%: further characteristics of the process and of the polybutadiene obtained are reported in Table 3.

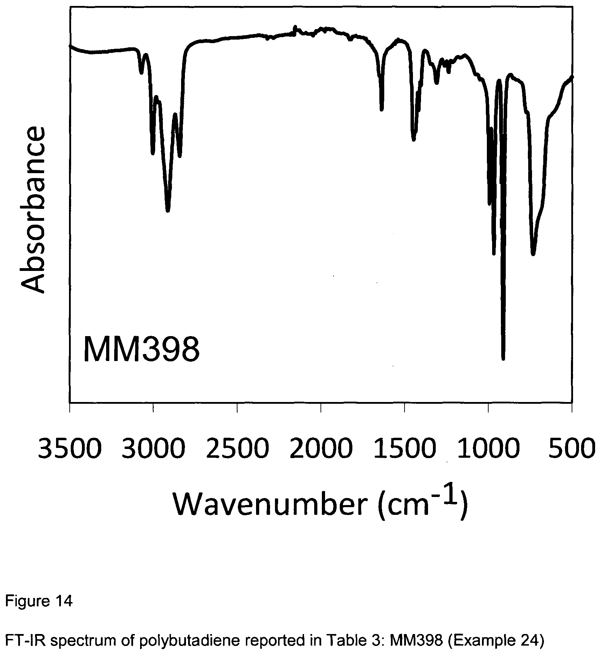

Figure 14 reports the FT-IR spectrum of the polybutadiene obtained.

### EXAMPLE 25 (MM374)

2 ml of 1,3-butadiene equal to about 1.4 g were condensed, in the cold (-20°C), in a 25 ml test tube. Subsequently, 6.65 ml of toluene were added and the temperature of the solution thus obtained was brought to 20°C. Then, methylaluminoxane (MAO) in toluene solution (6.3 ml; 1x10⁻² moles, equal to about 0.58 g) was added and, subsequently, the VCl₃(P*ⁱ*PrPh₂)₂ complex [sample G1325] (3.05 ml of toluene suspension at a concentration of 2 mg/ml; 1x10⁻⁵ moles, equal to about 6.1 mg) obtained as described in Example 3. Everything was kept, under magnetic stirring, at 20°C, for 2 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.235 g of polybutadiene with mixed cis/trans/1,2 structure having a 1,4-trans and 1,4-cis unit content of 84%: further characteristics of the process and of the polybutadiene obtained are reported in Table 3.

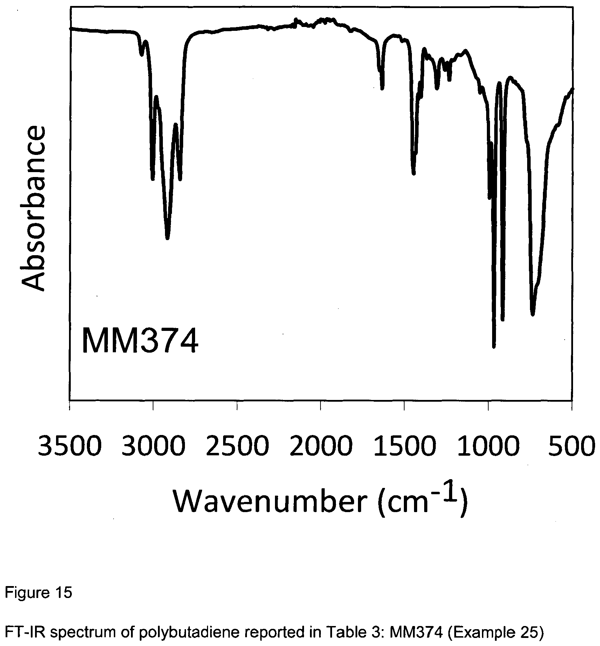

Figure 15 reports the FT-IR spectrum of the polybutadiene obtained.

### EXAMPLE 26 (MM341)

2 ml of 1,3-butadiene equal to about 1.4 g were condensed, in the cold (-20°C), in a 25 ml test tube. Subsequently, 6.65 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PⁱPrPh₂)₂ complex [sample G1325] (3.05 ml of toluene suspension at a concentration of 2 mg/ml; 1x10⁻⁵ moles, equal to about 6.1 mg) obtained as described in Example 3. Everything was kept, under magnetic stirring, at 20°C, for 2 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.684 g of polybutadiene with mixed cis/trans/1,2 structure having a 1,4-trans and 1,4-cis unit content of 73.2%: further characteristics of the process and of the polybutadiene obtained are reported in Table 3.

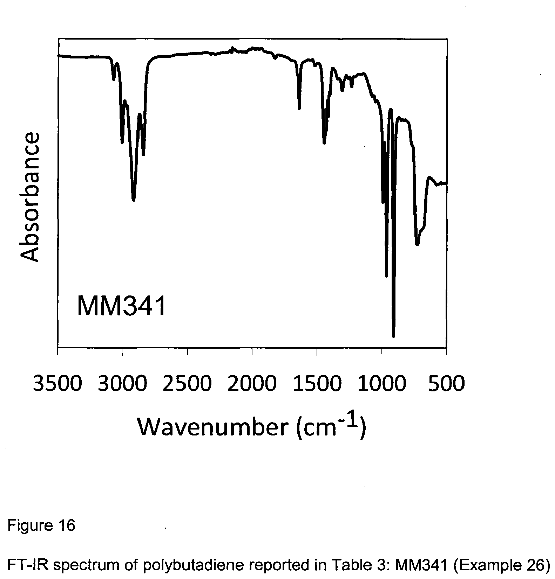

Figure 16 reports the FT-IR spectrum of the polybutadiene obtained.

### EXAMPLE 27 (MM335)

2 ml of 1,3-butadiene equal to about 1.4 g were condensed, in the cold (-20°C), in a 25 ml test tube. Subsequently, 6.25 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PCyPh₂)₂ complex [sample MM300] (3.45 ml of toluene suspension at a concentration of 2 mg/ml; 1x10⁻⁵ moles, equal to about 6.9 mg) obtained as described in Example 4. Everything was kept, under magnetic stirring, at 20°C, for 2 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1.1 g of polybutadiene with mixed cis/trans/1,2 structure having a 1,4-trans and 1,4-cis unit content of 68.8%: further characteristics of the process and of the polybutadiene obtained are reported in Table 3.

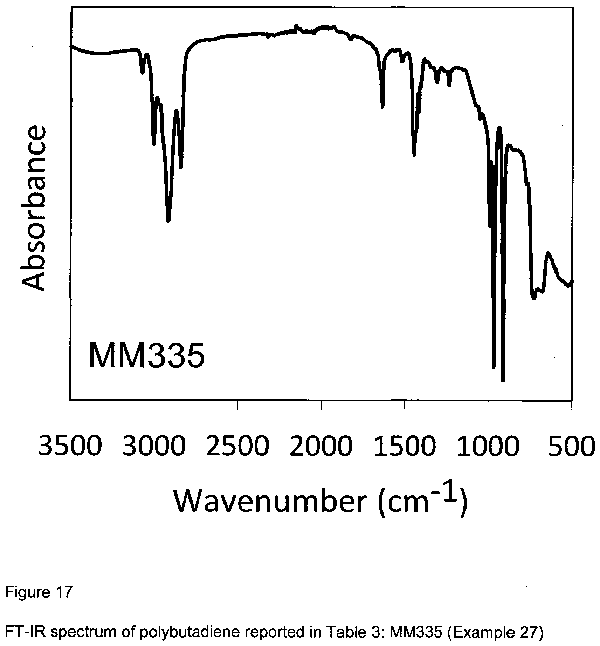

Figure 17 reports the FT-IR spectrum of the polybutadiene obtained.

### EXAMPLE 28 (MM336)

2 ml of 1,3-butadiene equal to about 1.4 g were condensed, in the cold (-20°C), in a 25 ml test tube. Subsequently, 6.25 ml of toluene were added and the temperature of the solution thus obtained was brought to 20°C. Then, methylaluminoxane (MAO) in toluene solution (6.3 ml; 1x10⁻² moles, equal to about 0.58 g) was added and, subsequently, the VCl₃(PCyPh₂)₂ complex [sample MM300] (3.45 ml of toluene suspension at a concentration of 2 mg/ml; 1x10⁻⁵ moles, equal to about 6.9 mg) obtained as described in Example 4. Everything was kept, under magnetic stirring, at 20°C, for 72 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.607 g of polybutadiene with mixed cis/trans/1,2 structure having a 1,4-trans and 1,4-cis unit content of 82%: further characteristics of the process and of the polybutadiene obtained are reported in Table 3.

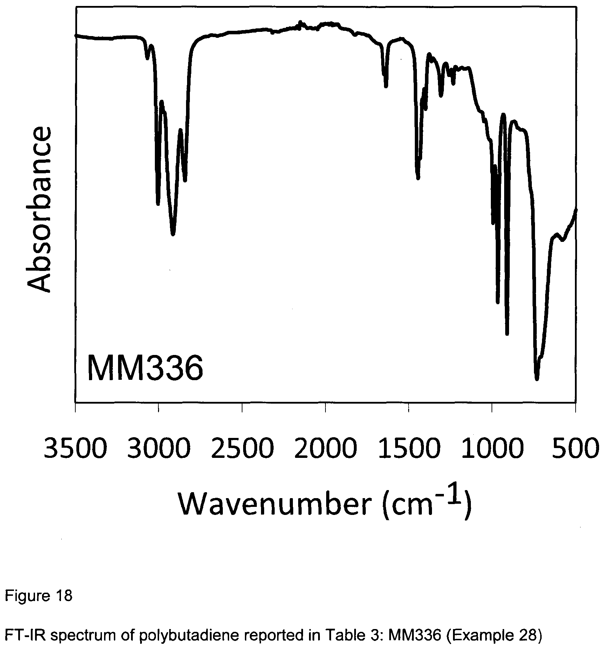

Figure 18 reports the FT-IR spectrum of the polybutadiene obtained.

### EXAMPLE 29 (MM338)

2 ml of 1,3-butadiene equal to about 1.4 g were condensed, in the cold (-20°C), in a 25 ml test tube. Subsequently, 6.25 ml of toluene were added and the temperature of the solution thus obtained was brought to -30°C. Then, methylaluminoxane-dry (MAO-dry) in toluene solution (6.3 ml; 1x10⁻² moles, equal to about 0.58 g) was added and, subsequently, the VCl₃(PCyPh₂)₂ complex [sample MM300] (3.45 ml of toluene suspension at a concentration of 2 mg/ml; 1x10⁻⁵ moles, equal to about 6.9 mg) obtained as described in Example 4. Everything was kept, under magnetic stirring, at -30°C, for 24 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.449 g of polybutadiene with prevalently 1,4-trans structure having a 1,4-trans unit content of 95.8%: further characteristics of the process and of the polybutadiene obtained are reported in Table 3.

### EXAMPLE 30 (G1306)

2 ml of 1,3-butadiene equal to about 1.4 g were condensed, in the cold (-20°C), in a 25 ml test tube. Subsequently, 6.25 ml of toluene were added and the temperature of the solution thus obtained was brought to 20°C. Then, methylaluminoxane (MAO) in toluene solution (6.3 ml; 1x10⁻² moles, equal to about 0.58 g) was added and, subsequently, the VCl₃(PPh₃)₂ complex [sample MM295] (3.4 ml of toluene suspension at a concentration of 2 mg/ml; 1 x1 0⁻⁵ moles, equal to about 6.8 mg) obtained as described in Example 5. Everything was kept, under magnetic stirring, at 20°C, for 21 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.742 g of polybutadiene with mixed cis/trans/1,2 structure having a 1,4-trans and 1,4-cis unit content of 81%: further characteristics of the process and of the polybutadiene obtained are reported in Table 3.

### EXAMPLE 31 (G1307)

2 ml of 1,3-butadiene equal to about 1.4 g were condensed, in the cold (-20°C), in a 25 ml test tube. Subsequently, 6.3 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PPh₃)₂ complex [sample MM295] (3.4 ml of toluene suspension at a concentration of 2 mg/ml; 1x10⁻⁵ moles, equal to about 6.8 mg) obtained as described in Example 5. Everything was kept, under magnetic stirring, at 20°C, for 21 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1.301 g of polybutadiene with mixed cis/trans/1,2 structure having a 1,4-trans and 1,4-cis unit content of 68.8%: further characteristics of the process and of the polybutadiene obtained are reported in Table 3.

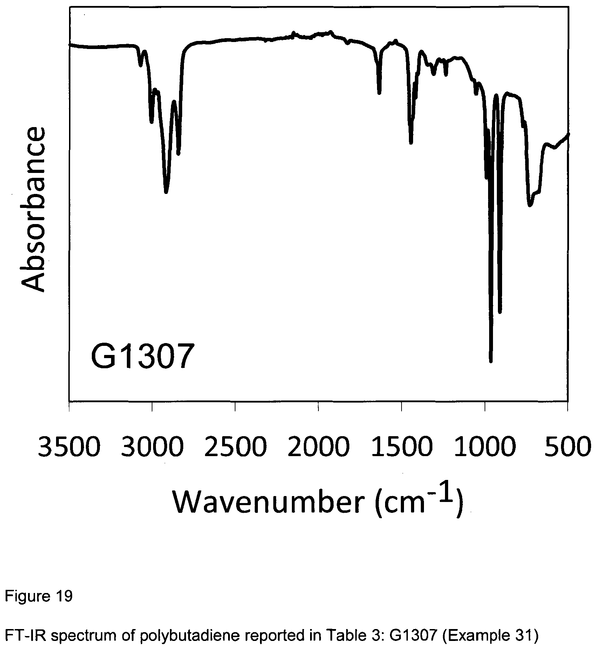

Figure 19 reports the FT-IR spectrum of the polybutadiene obtained.

### EXAMPLE 32 (MM317)

2 ml of 1,3-butadiene equal to about 1.4 g were condensed, in the cold (-20°C), in a 25 ml test tube. Subsequently, 6.9 ml of toluene were added and the temperature of the solution thus obtained was brought to 20°C. Then, methylaluminoxane (MAO) in toluene solution (6.3 ml; 1x10⁻² moles, equal to about 0.58 g) was added and, subsequently, the VCl₃(P^{t}Bu₃)₂ complex [sample G1299] (2.8 ml of toluene suspension at a concentration of 2 mg/ml; 1x10⁻⁵ moles, equal to about 5.6 mg) obtained as described in Example 9. Everything was kept, under magnetic stirring, at 20°C, for 20 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.819 g of polybutadiene with mixed cis/trans/1,2 structure having a 1,4-trans and 1,4-cis unit content of 86.5%: further characteristics of the process and of the polybutadiene obtained are reported in Table 3.

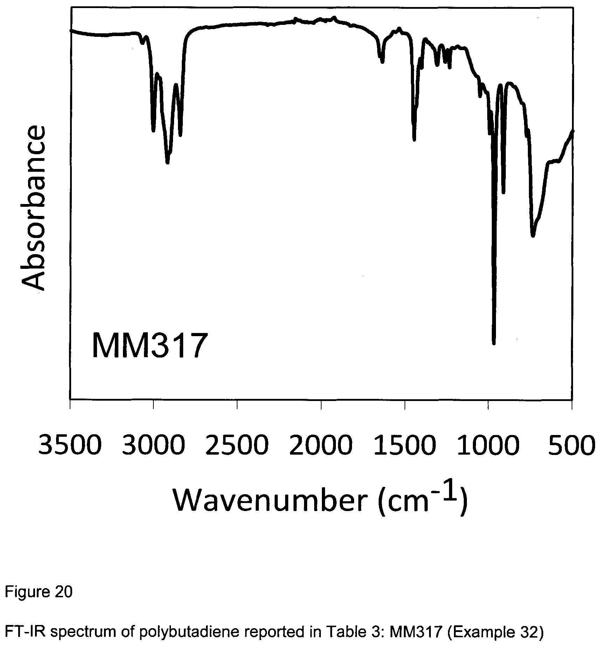

Figure 20 reports the FT-IR spectrum of the polybutadiene obtained.

### EXAMPLE 33 (MM318)

2 ml of 1,3-butadiene equal to about 1.4 g were condensed, in the cold (-20°C), in a 25 ml test tube. Subsequently, 6.9 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(P^{t}Bu₃)₂ complex [sample G1299] (2.8 ml of toluene suspension at a concentration of 2 mg/ml; 1x10⁻⁵ moles, equal to about 5.6 mg) obtained as described in Example 9. Everything was kept, under magnetic stirring, at 20°C, for 20 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.692 g of polybutadiene with mixed cis/trans/1,2 structure having a 1,4-trans and 1,4-cis unit content of 64.8%: further characteristics of the process and of the polybutadiene obtained are reported in Table 3.

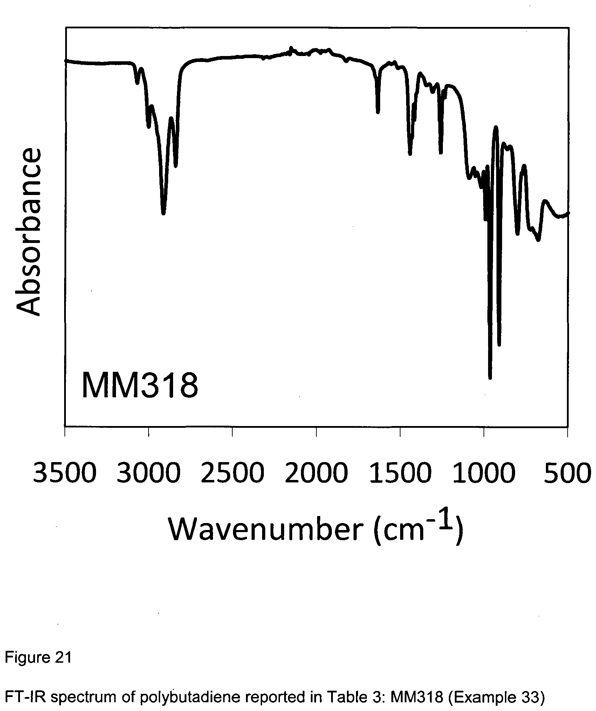

Figure 21 reports the FT-IR spectrum of the polybutadiene obtained.

### EXAMPLE 34 (MM365)

2 ml of 1,3-butadiene equal to about 1.4 g were condensed, in the cold (-20°C), in a 25 ml test tube. Subsequently, 6.55 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PCyp₃)₂ complex [sample G1286] (3.15 ml of toluene suspension at a concentration of 2 mg/ml; 1x10⁻⁵ moles, equal to about 6.3 mg) obtained as described in Example 7. Everything was kept, under magnetic stirring, at 20°C, for 2 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.67 g of polybutadiene with mixed cis/trans/1,2 structure having a 1,4-trans and 1,4-cis unit content of 76.3%: further characteristics of the process and of the polybutadiene obtained are reported in Table 3.

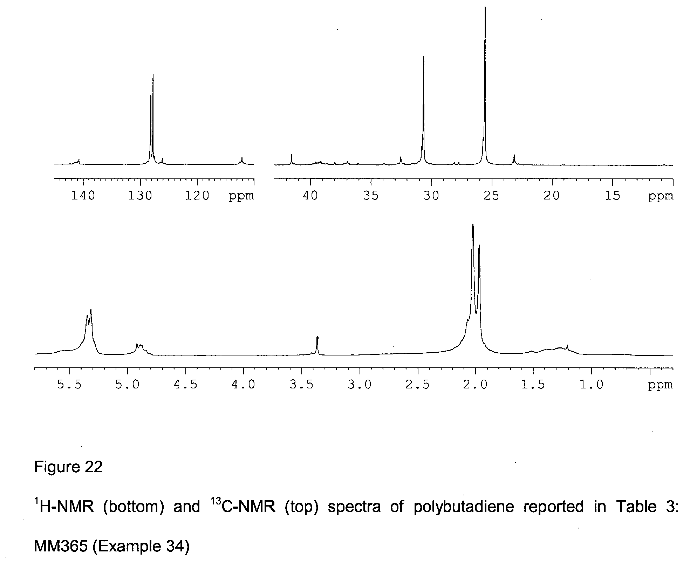

Figure 22 reports the ¹H-NMR and ¹³C-NMR spectra of the polybutadiene obtained.

### EXAMPLE 35 (G1376)

2 ml of 1,3-butadiene equal to about 1.4 g were condensed, in the cold (-20°C), in a 25 ml test tube. Subsequently, 6.25 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PCy₃)₂ complex [sample MM370] (3.45 ml of toluene suspension at a concentration of 2 mg/ml; 1x10⁻⁵ moles, equal to about 6.9 mg) obtained as described in Example 6. Everything was kept, under magnetic stirring, at 20°C, for 15 minutes. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.461 g of polybutadiene with mixed cis/trans/1,2 structure having a 1,4-trans and 1,4-cis unit content of 81%: further characteristics of the process and of the polybutadiene obtained are reported in Table 3.

### EXAMPLE 36 (MM378)

2 ml of 1,3-butadiene equal to about 1.4 g were condensed, in the cold (-20°C), in a 25 ml test tube. Subsequently, 6.9 ml of heptane were added and the temperature of the solution thus obtained was brought to 20°C. Then, methylaluminoxane-dry (MAO-dry) in heptane solution (6.3 ml; 1x10⁻² moles, equal to about 0.58 g) was added and, subsequently, the VCl₃(PCy₂H)₂ complex [sample G1303] (2.77 ml of toluene suspension at a concentration of 2 mg/ml; 1x10⁻⁵ moles, equal to about 5.5 mg) obtained as described in Example 8. Everything was kept, under magnetic stirring, at 20°C, for 20 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.338 g of polybutadiene with mixed cis/trans/1,2 structure having a 1,4-trans and 1,4-cis unit content of 83.5%: further characteristics of the process and of the polybutadiene obtained are reported in Table 3.

### EXAMPLE 37 (MM379)

2 ml of 1,3-butadiene equal to about 1.4 g were condensed, in the cold (-20°C), in a 25 ml test tube. Subsequently, 6.9 ml of heptane were added and the temperature of the solution thus obtained was brought to 20°C. Then, methylaluminoxane-dry (MAO-dry) in heptane solution (6.3 ml; 1x10⁻² moles, equal to about 0.58 g) was added and, subsequently, the VCl₃(PCy₂H)₂ complex [sample G1303] (2.77 ml of heptane suspension at a concentration of 2 mg/ml; 1x10⁻⁵ moles, equal to about 5.5 mg) obtained as described in Example 8. Everything was kept, under magnetic stirring, at 20°C, for 2 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.268 g of polybutadiene with mixed cis/trans/1,2 structure having a 1,4-trans and 1,4-cis unit content of 62.3%: further characteristics of the process and of the polybutadiene obtained are reported in Table 3.

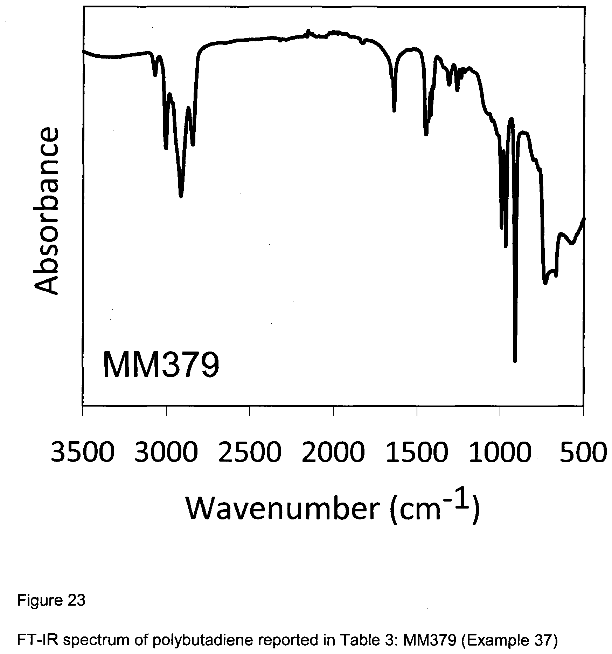

Figure 23 reports the FT-IR spectrum of the polybutadiene obtained.

### EXAMPLE 38 (MM279)

2 ml of 1,3-butadiene equal to about 1.4 g were condensed, in the cold (-20°C), in a 25 ml test tube. Subsequently, 8.25 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(dmpe) complex [sample G1275] (1.53 ml of toluene suspension at a concentration of 2 mg/ml; 1x10⁻⁵ moles, equal to about 3.06 mg) obtained as described in Example 10. Everything was kept, under magnetic stirring, at 20°C, for 72 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.113 g of polybutadiene with mixed cis/trans/1,2 structure having a 1,4-trans and 1,4-cis unit content of 64.6%: further characteristics of the process and of the polybutadiene obtained are reported in Table 3.

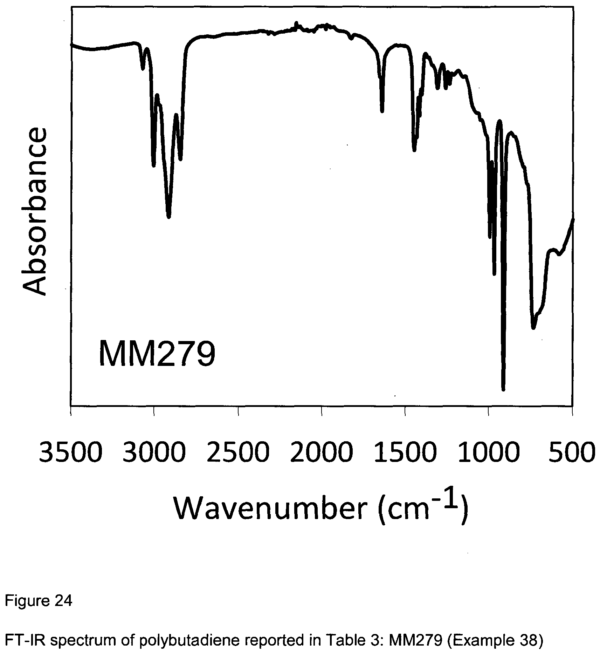

Figure 24 reports the FT-IR spectrum of the polybutadiene obtained.

### EXAMPLE 39 (G1284)

2 ml of 1,3-butadiene equal to about 1.4 g were condensed, in the cold (-20°C), in a 25 ml test tube. Subsequently, 7 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(dppa) complex [sample G1281] (2.72 ml of toluene suspension at a concentration of 2 mg/ml; 1x10⁻⁵ moles, equal to about 5.5 mg) obtained as described in Example 12. Everything was kept, under magnetic stirring, at 20°C, for 3.5 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.445 g of polybutadiene with mixed cis/trans/1,2 structure having a 1,4-trans and 1,4-cis unit content of 73.1%: further characteristics of the process and of the polybutadiene obtained are reported in Table 3.

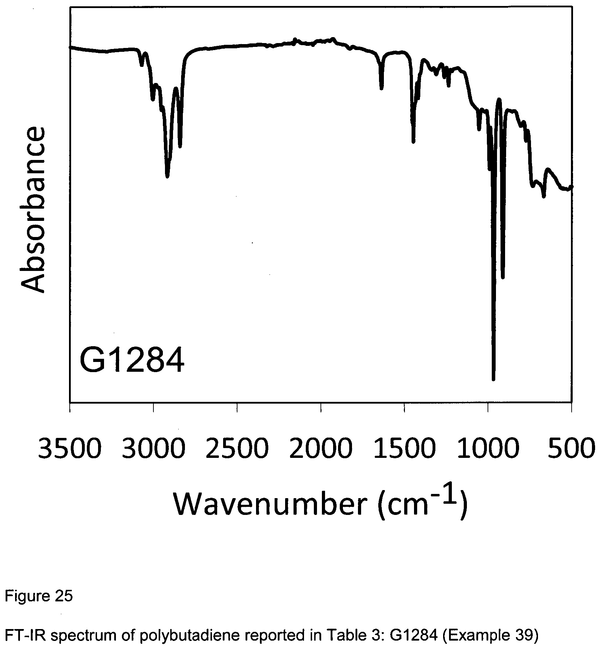

Figure 25 reports the FT-IR spectrum of the polybutadiene obtained.

### EXAMPLE 40 (G1314)

2 ml of isoprene equal to about 1.36 g were placed in a 25 ml test tube. Subsequently, 6.75 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PEtPh₂)₂ complex [sample G1298] (2.95 ml of toluene suspension at a concentration of 2 mg/ml; 1 x1 0⁻⁵ moles, equal to about 5.9 mg) obtained as described in Example 2. Everything was kept, under magnetic stirring, at 20°C, for 18 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.860 g of polyisoprene with mixed cis/trans/3,4 structure having a 1,4-trans and 1,4-cis unit content of 81.4%: further characteristics of the process and of the polyisoprene obtained are reported in Table 4.

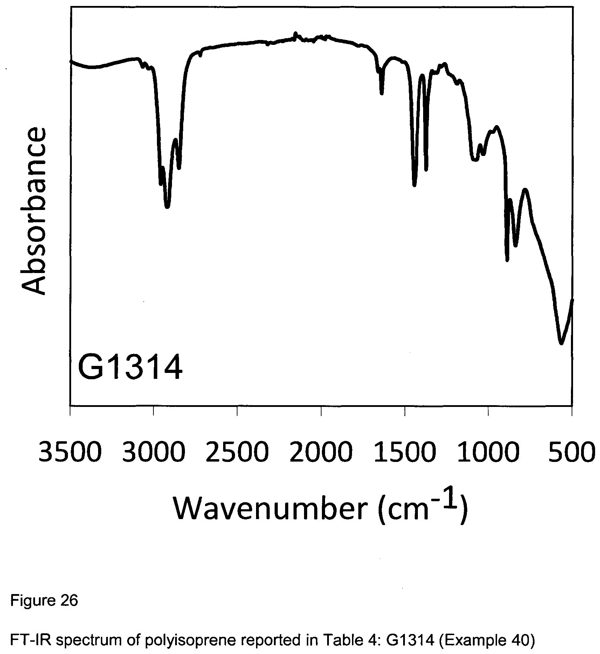

Figure 26 reports the FT-IR spectrum of the polyisoprene obtained.

### EXAMPLE 41 (MM401)

2 ml of isoprene equal to about 1.36 g were placed in a 25 ml test tube. Subsequently, 6.75 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PEtPh₂)₂ complex [sample G1298] (2.95 ml of toluene suspension at a concentration of 2 mg/ml; 1x10⁻⁵ moles, equal to about 5.9 mg) obtained as described in Example 2. Everything was kept, under magnetic stirring, at 20°C, for 1.15 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.104 g of polyisoprene with mixed cis/trans/3,4 structure having a 1,4-trans and 1,4-cis unit content of 70.4%: further characteristics of the process and of the polyisoprene obtained are reported in Table 4.

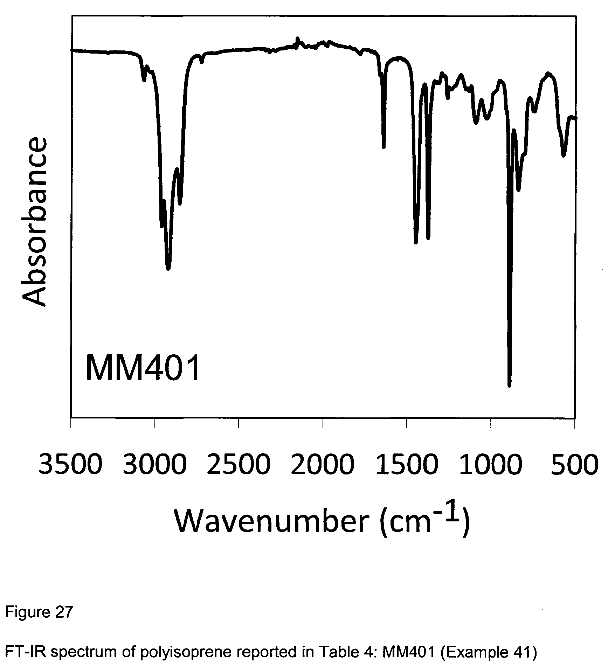

Figure 27 reports the FT-IR spectrum of the polyisoprene obtained.

### EXAMPLE 42 (MM402)

2 ml of isoprene equal to about 1.36 g were placed in a 25 ml test tube. Subsequently, 6.75 ml of 1,2-dichlorobenzene were added and the temperature of the solution thus obtained was brought to 20°C. Then, methylaluminoxane-dry (MAO-dry) in 1,2-dichlorobenzene solution (6.3 ml; 1x10⁻² moles, equal to about 0.58 g) was added and, subsequently, the VCl₃(PEtPh₂)₂ complex [sample G1298] (2.95 ml of 1,2-dichlorobenzene suspension at a concentration of 2 mg/ml; 1x10⁻⁵ moles, equal to about 5.9 mg) obtained as described in Example 2. Everything was kept, under magnetic stirring, at 20°C, for 1.15 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.207 g of polyisoprene with mixed cis/trans/3,4 structure having a 1,4-trans and 1,4-cis unit content of 63.5%: further characteristics of the process and of the polyisoprene obtained are reported in Table 4.

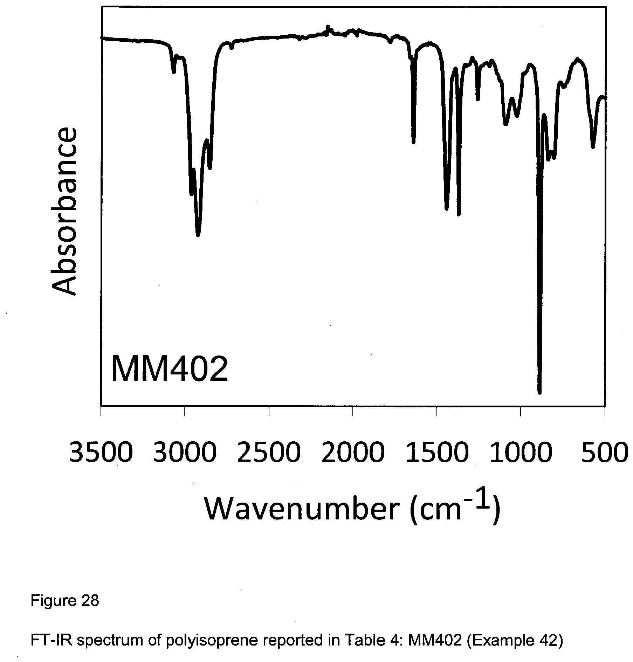

Figure 28 reports the FT-IR spectrum of the polyisoprene obtained.

### EXAMPLE 43 (MM343)

2 ml of isoprene equal to about 1.36 g were placed in a 25 ml test tube. Subsequently, 6.65 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(P*ⁱ*PrPh₂)₂ complex [sample G1325] (3.05 ml of toluene suspension at a concentration of 2 mg/ml; 1 x1 0⁻⁵ moles, equal to about 6.1 mg) obtained as described in Example 3. Everything was kept, under magnetic stirring, at 20°C, for 24 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1.02 g of polyisoprene with mixed cis/trans/3,4 structure having a 1,4-trans and 1,4-cis unit content of 77.3%: further characteristics of the process and of the polyisoprene obtained are reported in Table 4.

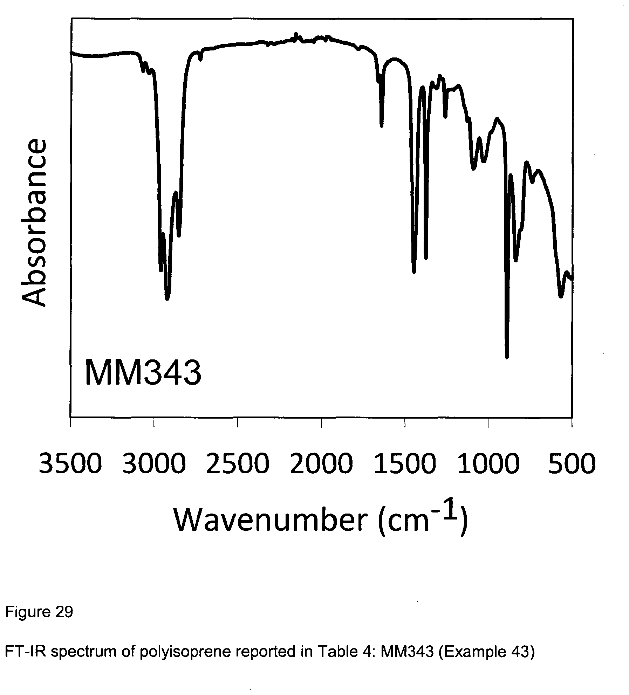

Figure 29 reports the FT-IR spectrum of the polyisoprene obtained.

### EXAMPLE 44 (MM346)

2 ml of isoprene equal to about 1.36 g were placed in a 25 ml test tube. Subsequently, 6.65 ml of 1,2-dichlorobenzene were added and the temperature of the solution thus obtained was brought to 20°C. Then, methylaluminoxane-dry (MAO-dry) in 1,2-dichlorobenzene solution (6.3 ml; 1x10⁻² moles, equal to about 0.58 g) was added and, subsequently, the VCl₃(P*ⁱ*PrPh₂)₂ complex [sample G1325] (3.05 ml of toluene suspension at a concentration of 2 mg/ml; 1x10⁻⁵ moles, equal to about 6.1 mg) obtained as described in Example 3. Everything was kept, under magnetic stirring, at 20°C, for 30 minutes. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1 g of polyisoprene with mixed cis/trans/3,4 structure having a 1,4-trans and 1,4-cis unit content of 68.9%: further characteristics of the process and of the polyisoprene obtained are reported in Table 4.

### EXAMPLE 45 (MM371)

2 ml of isoprene equal to about 1.36 g were placed in a 25 ml test tube. Subsequently, 6.65 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PⁱPrPh₂)₂ complex [sample G1325] (3.05 ml of toluene suspension at a concentration of 2 mg/ml; 1 x1 0⁻⁵ moles, equal to about 6.1 mg) obtained as described in Example 3. Everything was kept, under magnetic stirring, at 20°C, for 5 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.249 g of polyisoprene with mixed cis/trans/3,4 structure having a 1,4-trans and 1,4-cis unit content of 74.2%: further characteristics of the process and of the polyisoprene obtained are reported in Table 4.

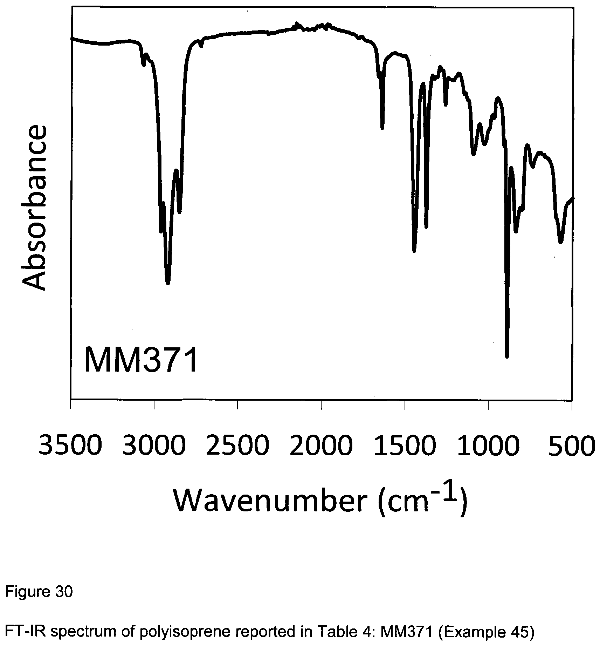

Figure 30 reports the FT-IR spectrum of the polyisoprene obtained.

### EXAMPLE 46 (MM372)

2 ml of isoprene equal to about 1.36 g were placed in a 25 ml test tube. Subsequently, 6.65 ml of toluene were added and the temperature of the solution thus obtained was brought to 20°C. Then, methylaluminoxane (MAO) in toluene solution (6.3 ml; 1x10⁻² moles, equal to about 0.58 g) was added and, subsequently, the VCl₃(PⁱPrPh₂)₂ complex [sample G1325] (3.05 ml of toluene suspension at a concentration of 2 mg/ml; 1x10⁻⁵ moles, equal to about 6.1 mg) obtained as described in Example 3. Everything was kept, under magnetic stirring, at 20°C, for 96 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.764 g of polyisoprene with prevalently 1,4-cis structure having a 1,4-cis unit content of 87%: further characteristics of the process and of the polyisoprene obtained are reported in Table 4.

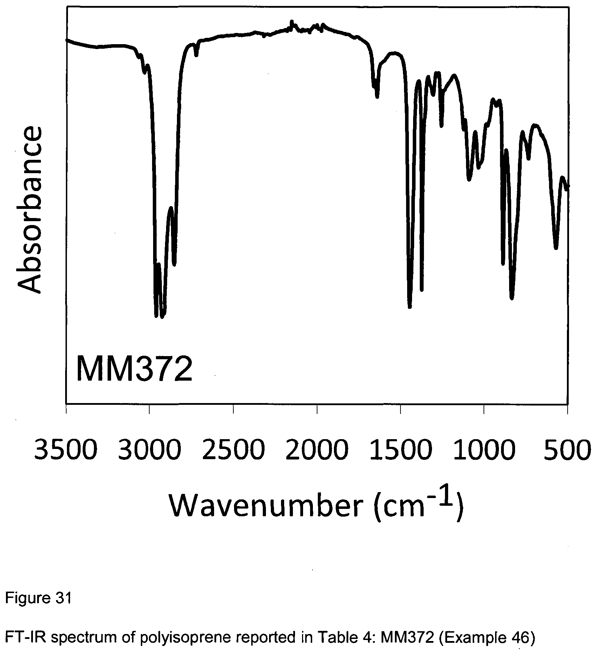

Figure 31 reports the FT-IR spectrum of the polyisoprene obtained.

### EXAMPLE 47 (MM337)

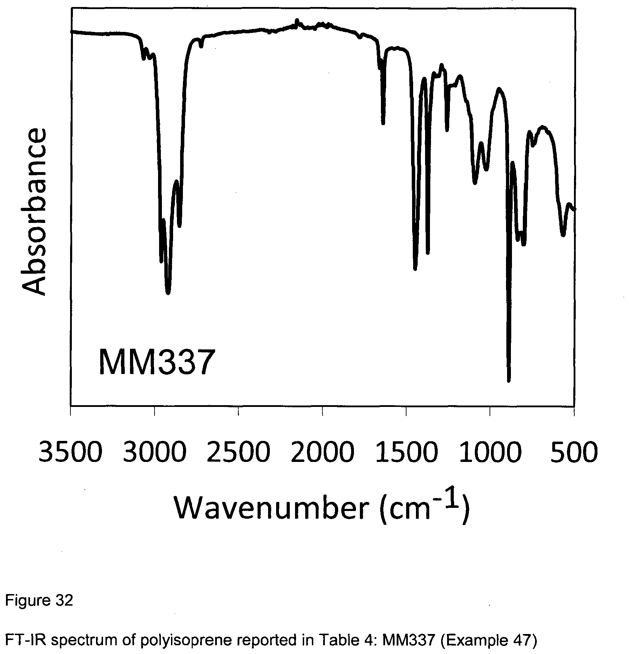

2 ml of isoprene equal to about 1.36 g were placed in a 25 ml test tube. Subsequently, 6.25 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PCyPh₂)₂ complex [sample MM300] (3.45 ml of toluene suspension at a concentration of 2 mg/ml; 1x10⁻⁵ moles, equal to about 6.9 mg) obtained as described in Example 4. Everything was kept, under magnetic stirring, at 20°C, for 2 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.387 g of polyisoprene with mixed cis/trans/3,4 structure having a 1,4-trans and 1,4-cis unit content of 76.2%: further characteristics of the process and of the polyisoprene obtained are reported in Table 4. Figure 32 reports the FT-IR spectrum of the polyisoprene obtained.

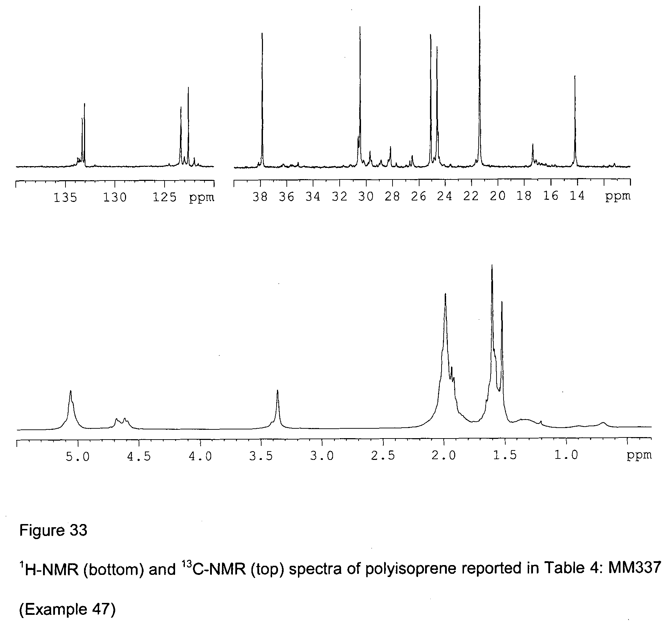

Figure 33 reports the ¹H-NMR and ¹³C-NMR spectra of the polyisoprene obtained.

### EXAMPLE 48 (G1310)

2 ml of isoprene equal to about 1.36 g were placed in a 25 ml test tube. Subsequently, 6.3 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PPh₃)₂ complex [sample MM295] (3.4 ml of toluene suspension at a concentration of 2 mg/ml; 1x10⁻⁵ moles, equal to about 6.8 mg) obtained as described in Example 5. Everything was kept, under magnetic stirring, at 20°C, for 2 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.12 g of polyisoprene with mixed cis/trans/3,4 structure having a 1,4-trans and 1,4-cis unit content of 75%: further characteristics of the process and of the polyisoprene obtained are reported in Table 4.

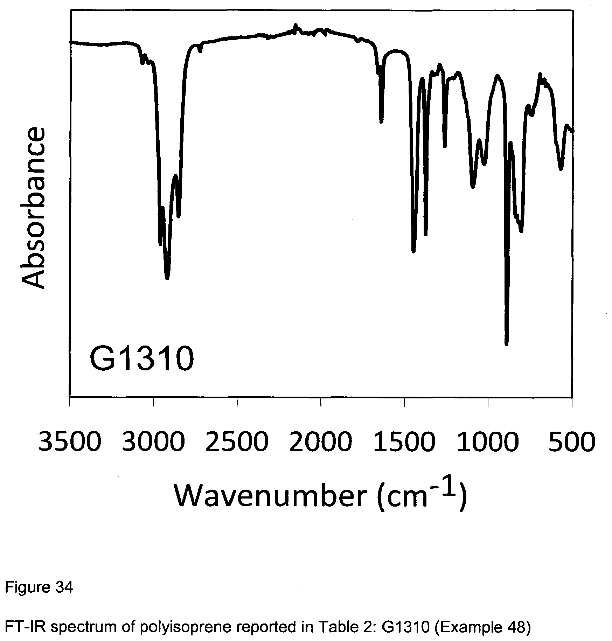

Figure 34 reports the FT-IR spectrum of the polyisoprene obtained.

### EXAMPLE 49 (MM332)

2 ml of isoprene equal to about 1.36 g were placed in a 25 ml test tube. Subsequently, 6.9 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(P^{t}Bu₃)₂ complex [sample G1299] (2.8 ml of toluene suspension at a concentration of 2 mg/ml; 1x10⁻⁵ moles, equal to about 5.6 mg) obtained as described in Example 9. Everything was kept, under magnetic stirring, at 20°C, for 24 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.415 g of polyisoprene with mixed cis/trans/3,4 structure having a 1,4-trans and 1,4-cis unit content of 86.2%: further characteristics of the process and of the polyisoprene obtained are reported in Table 4.

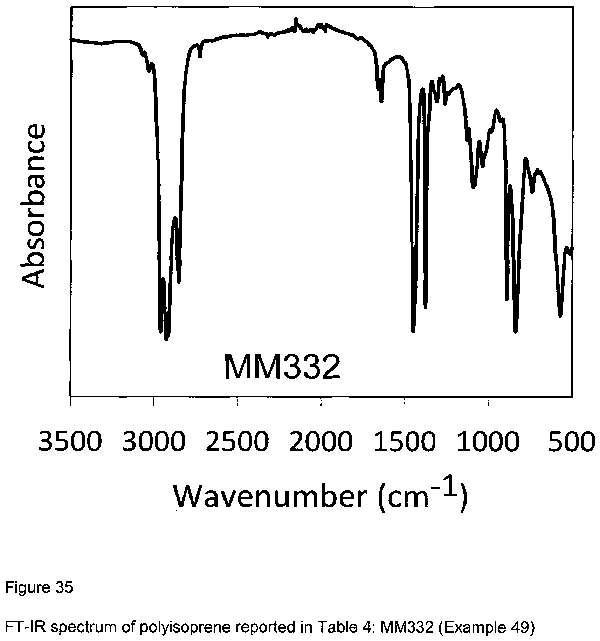

Figure 35 reports the FT-IR spectrum of the polyisoprene obtained.

### EXAMPLE 50 (MM375)

2 ml of isoprene equal to about 1.36 g were placed in a 25 ml test tube. Subsequently, 6.25 ml of toluene were added and the temperature of the solution thus obtained was brought to 20°C. Then, methylaluminoxane-dry (MAO-dry) in toluene solution (6.3 ml; 1x10⁻² moles, equal to about 0.58 g) was added and, subsequently, the VCl₃(PCy₃)₂ complex [sample MM370] (3.45 ml of toluene suspension at a concentration of 2 mg/ml; 1x10⁻⁵ moles, equal to about 6.9 mg) obtained as described in Example 6. Everything was kept, under magnetic stirring, at 20°C, for 19 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.358 g of polyisoprene with mixed cis/trans/3,4 structure having a 1,4-trans and 1,4-cis unit content of 76.8%: further characteristics of the process and of the polyisoprene obtained are reported in Table 4.

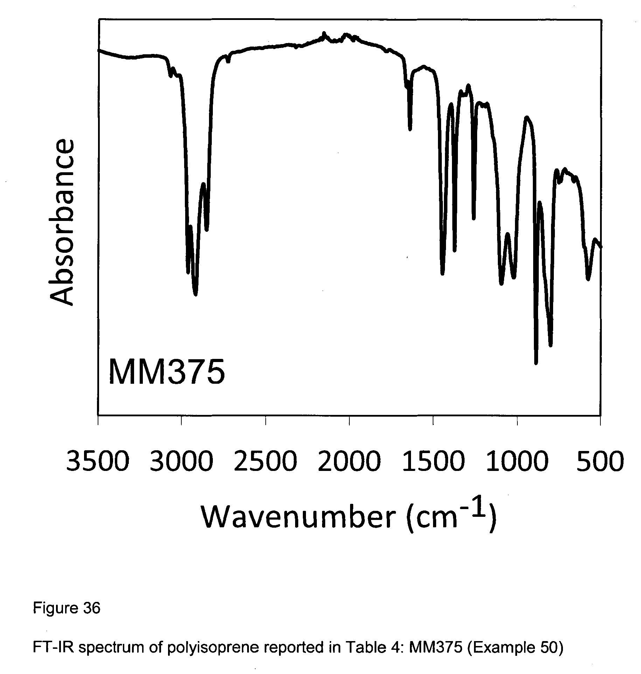

Figure 36 reports the FT-IR spectrum of the polyisoprene obtained.

### EXAMPLE 51 (MM377)

2 ml of isoprene equal to about 1.36 g were placed in a 25 ml test tube. Subsequently, 6.25 ml of heptane were added and the temperature of the solution thus obtained was brought to 20°C. Then, methylaluminoxane-dry (MAO-dry) in heptane solution (6.3 ml; 1x10⁻² moles, equal to about 0.58 g) was added and, subsequently, the VCl₃(PCy₂H)₂ complex [sample G1303] (2.77 ml of heptane suspension at a concentration of 2 mg/ml; 1x10⁻⁵ moles, equal to about 5.5 mg) obtained as described in Example 8. Everything was kept, under magnetic stirring, at 20°C, for 20 hours. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 0.674 g of polyisoprene with mixed cis/trans/3.4 structure having a 1,4-trans and 1,4-cis unit content of 82.7%: further characteristics of the process and of the polyisoprene obtained are reported in Table 4.

**TABLE 1**

| Crystallographic data, Details of Data Collection and Refinement Results for the complexes VCl₃(PMePh₂)₂ (Example 1) (I), VCl₃(PCyp₃)₂ (Example 7) (II) and VCl₃(PEtPh₂)₂ (Example 2) (III) | | | |
|---|---|---|---|
| | (I) | (II) | (III) |
| formula, Mw | C₂₆H₂₆Cl₃P₂V, 557.70 | C₃₀H₅₄Cl₃P₂V, 633.96 | C₂₈H₃₀Cl₃P₂V, 585.75 |
| crystal system | Triclinic | Triclinic | Monoclinic |
| space group, Z, Z' | P-1, 4, 2 | P-1, 2, 1 | P21/c, 4, 1 |
| Dcalc, g cm⁻³ | 1.393 | 1.349 | 1.393 |
| a, Å | 11.8722(7) | 9.9362(15) | 8.3234(12) |
| b, Å | 13.1864(7) | 11.7793(18) | 9.7489(14) |
| c, Å | 17.6804(10) | 14.673(2) | 34.500(5) |
| α, ° | 74.0516(8) | 83.712(2) | 90 |
| β, ° | 88.8531(9) | 89.645(2) | 93.804(2) |
| γ,° | 88.1796(8) | 66.242(2) | 90 |
| V, Å3 | 2659.8(3) | 1561.0(4) | 2793.3(7) |
| crystal dimensions, mm | 0.37×0.37×0.15 | 0.50×0.17×0.15 | 0.50×0.20×0.20 |
| color, shape | red, "tablet" | red, "tablet" | orange, "tablet" |
| µ, mm⁻¹ | 0.807 | 0.696 | 0.773 |
| radiation | MoKα | MoKα | MoKα |
| T, K | 130(2) | 100(2) | 130(2) |
| 2θmax, ° | 64.67 | 46.56 | 50.91 |
| h, k, l ranges | -17→17, -19→19, -26→26 | -11→11, -13→13, -16→16 | -10→10, -11→11, -41→41 |
| decay intensity, % | 0.00 | 0.00 | 0.00 |
| absorption correction | multi-scan | multi-scan | multi-scan |
| Tmin, Tmax | 0.680, 0.746 | 0.591, 0.745 | 0.660, 0.745 |
| measured reflections | 57731 | 16969 | 37054 |
| Rint | 0.0302 | 0.0395 | 0.0468 |
| independent reflections | 18106 | 4488 | 5141 |
| reflections with I>2σ(I) | 13934 | 3859 | 4377 |
| no. of parameters | 581 | 325 | 309 |
| R, wR [F2>2σ( F2)] | 0.0483, 0.1225 | 0.0385, 0.0911 | 0.0261, 0.0564 |
| goodness of convergence | 1.028 | 1.066 | 1.035 |
| Δρ max, Δρ min (eÅ-3) | 1.595, -1.622 | 0.606, -0.940 | 0.286, -0.249 |

**TABLE 2**

| Bond lengths (Å) and Angles (°) selected for complexes VCl₃(PMePh₂)₂ (Example 1) (I), VCl₃(PCyp₃)₂ (Example 7) (II) and VCl₃(PEtPh₂)₂ (Example 2) (III)^{(a)} | | | |
|---|---|---|---|
| | (I) | (II) | (III) |
| V-CI | 2.2287(8) | 2.2384(12) | 2.2408(6) |
| V-P | 2.5280(6) | 2.5696(10) | 2.5465(6) |
| P-Cₐᵣ | 1.820(2) | - | 1.8251(19) |
| P-Cₐₗᵢₚₕ | 1.822(2) | 1.847(3) | 1.8332(19) |
| Cl-V-Cl | 119.98(3) | 120.00(4) | 119.99(2) |
| P-V-P | 169.02(2) | 170.48(3) | 177.87(2) |
| Cₐᵣ-P-Cₐᵣ | 103.73(10) | - | 103.85(8) |
| Cₐᵣ-P-Cₐₗᵢₚₕ | 105.20(11) | - | 105.42(9) |
| Cₐₗᵢₚₕ-P-Cₐₗᵢₚₕ | | 105.46(15) | |

| | | | |
|---|---|---|---|
| ^{(a)}: Each value reported was obtained as the mean of all the corresponding parameters present in the structure. | | | |

**TABLE 3**

| Polymerization of 1,3-butadiene with catalytic systems comprising vanadium phosphinic complexes | | | | | | | | | |
|---|---|---|---|---|---|---|---|---|---|
| Example | Temperature (°C) | Time (h) | Conversion (%) | N^{(a)} (h⁻¹) | 1,4-cis (%) | 1,4- trans (%) | 1,2 (%) | M_{w} (gxmol⁻¹) | M_{w}/Mₙ |
| 13 | 20 | 72 | 17,2 | 3 | 47,2 | 30 | 22,8 | 196224 | 1,8 |
| 14 | 20 | 4,5 | 14,5 | 42 | 72 | 13,8 | 14,2 | 164184 | 1,9 |
| 15 | 20 | 5 | 35,6 | 184 | 32 | 28 | 40 | 278725 | 1,8 |
| 16 | 20 | 2 | 60,4 | 782 | 30,3 | 44,5 | 25,2 | 212824 | 2,0 |
| 17 | -30 | 24 | 26 | 28 | 0 | 95,1 | 4,9 | 345678 | 1,6 |
| 18 | 20 | 20 | 25,3 | 33 | 75,3 | 10,1 | 14,6 | 155879 | 1,9 |
| 19 | 20 | 3 | 58,2 | 503 | 25,2 | 46,1 | 28,7 | 202457 | 1,9 |
| 20 | 20 | 2,5 | 83,6 | 867 | 28,1 | 34,6 | 37,3 | 216794 | 1,9 |
| 21 | 20 | 5 | 34,5 | 179 | 36,3 | 25,4 | 38,3 | 237893 | 2,0 |
| 22 | 20 | 24 | 20 | 22 | 58,4 | 23,4 | 18,2 | 159985 | 1,8 |
| 23 | 20 | 24 | 14,5 | 16 | 25,7 | 54,5 | 19,8 | 170469 | 2,0 |
| 24^{(b)} | 20 | 2,16 | 55,6 | 667 | 59,9 | 15,6 | 24,5 | 236723 | 1,9 |
| 25 | 20 | 2 | 16,8 | 218 | 66,4 | 17,6 | 16 | 101894 | 2,6 |
| 26 | 20 | 2 | 48,9 | 633 | 53,4 | 19,8 | 26,8 | 112385 | 3,5 |
| 27 | 20 | 2 | 78,6 | 1019 | 37,3 | 31,5 | 31,2 | 115614 | 3,0 |
| 28 | 20 | 72 | 43 | 16 | 67,1 | 14,9 | 1,8 | 99968 | 2,9 |
| 29 | -30 | 24 | 32 | 35 | 0 | 95,8 | 4,2 | 135469 | 2,4 |
| 30 | 20 | 21 | 51,7 | 64 | 62 | 19 | 19 | 290552 | 1,6 |
| 31 | 20 | 21 | 92,9 | 115 | 29,6 | 39,2 | 31,2 | 177455 | 4,2 |
| 32 | 20 | 20 | 58,5 | 76 | 52,6 | 33,9 | 13,5 | 188227 | 1,8 |
| 33 | 20 | 20 | 49,4 | 64 | 21 | 43,8 | 35,2 | 253345 | 3,1 |
| 34 | 20 | 2 | 47,9 | 620 | 42,1 | 34,2 | 23,7 | 183294 | 3,5 |
| 35 | 20 | 0,25 | 33 | 3414 | 45 | 36 | 19 | 192538 | 3,3 |
| 36^{(c)} | 20 | 20 | 24 | 26 | 70,5 | 13 | 16,5 | 190482 | 3,0 |
| 37^{(c)} | 20 | 2 | 43 | 559 | 41,1 | 21,2 | 37,7 | 244237 | 3,2 |
| 38 | 20 | 72 | 7,4 | 3 | 45,9 | 18,7 | 35,4 | 86135 | 2,3 |
| 39 | 20 | 3,5 | 31,8 | 235 | 26,6 | 46,5 | 26,9 | 211364 | 2,1 |

| | | | | | | | | | |
|---|---|---|---|---|---|---|---|---|---|
| ^{(a)}: number of moles of 1,3-butadiene polymerized per hour per mole of vanadium; ^{(b)}: polymerization solvent 1,2-dichlorobenzene; ^{(c)}: polymerization solvent heptane. | | | | | | | | | |

**TABLE 4**

| Polymerization of isoprene with catalytic systems comprising vanadium phosphinic complexes | | | | | | | | | |
|---|---|---|---|---|---|---|---|---|---|
| Example | Temperature (°C) | Time (h) | Conversion (%) | N^{(a)} (h⁻¹) | 1,4-cis (%) | 1,4-trans (%) | 3,4 (%) | M_{w} (gxmol⁻¹) | M_{w}/Mₙ |
| 40 | 20 | 18 | 63,2 | 70 | 59,9 | 21,5 | 18,6 | 208350 | 1,8 |
| 41 | 20 | 1,15 | 7,6 | 133 | 52,1 | 18,3 | 29,6 | 184583 | 1,8 |
| 42^{(b)} | 20 | 1,15 | 15,2 | 265 | 47,0 | 16,5 | 36,5 | 216725 | 2,1 |
| 43 | 20 | 24 | 75 | 63 | 57,2 | 20,1 | 22,7 | 139100 | 1,7 |
| 44^{(b)} | 20 | 0,5 | 73,5 | 2941 | 51,0 | 17,9 | 31,1 | 302697 | 1,8 |
| 45 | 20 | 5 | 18,3 | 73 | 54,9 | 19,3 | 25,8 | 202365 | 1,9 |
| 46 | 20 | 96 | 56,2 | 12 | 87,0 | 0 | 13,0 | 200153 | 1,8 |
| 47 | 20 | 2 | 28,5 | 285 | 67,6 | 8,6 | 23,8 | 224023 | 2,5 |
| 48 | 20 | 2 | 8,8 | 88 | 55,5 | 19,5 | 25 | 108617 | 2,2 |
| 49 | 20 | 24 | 30,5 | 25 | 63,8 | 22,4 | 13,8 | 135921 | 2,3 |
| 50 | 20 | 19 | 26,3 | 28 | 56,9 | 19,9 | 23,2 | 128795 | 2,4 |
| 51^{(c)} | 20 | 20 | 49,6 | 50 | 61,2 | 21,5 | 17,3 | 155698 | 2,5 |

| | | | | | | | | | |
|---|---|---|---|---|---|---|---|---|---|
| ^{(a)}: number of moles of isoprene polymerized per hour per mole of vanadium; ^{(b)}: polymerization solvent 1,2-dichlorobenzene; ^{(c)}: polymerization solvent heptane. | | | | | | | | | |

## Claims

1. Process for the (co)polymerization of conjugated dienes, **characterized by** the fact of using a catalytic system comprising:
(a) at least one phosphinic vanadium complex having the general formula (I) or (II):
V(X)₃[P(R₁)ₙ(R₂)₃₋ₙ]₂ (I)
V(X)₃[(R₃)₂P(R₄)P(R₃)₂] (II)
wherein:
- X represents an anion selected from halogen such as chlorine, bromine, iodine, preferably chlorine; or is selected from the following groups: thiocyanate, isocyanate, sulfate, acid sulfate, phosphate, acid phosphate, carboxylate, dicarboxylate;
- R₁, identical or different among them, represent a hydrogen atom, or an allyl group (CH₂=CH-CH₂-); or are selected from alkyl groups C₁-C₂₀, preferably C₁-C₁₅, linear or branched, optionally halogenated, optionally substituted cycloalkyl groups;
- n is an integer ranging from 0 to 3;
- R₂, identical or different among them, are selected from optionally substituted aryl groups;
- R₃, identical or different among them, represent a hydrogen atom, or an allyl group (CH₂ = CH-CH₂-); or are selected from alkyl groups C₁-C₂₀, preferably C₁-C₁₅, linear or branched, optionally halogenated, optionally substituted cycloalkyl groups, optionally substituted aryl groups;
- R₄ represents a group -NR₅ wherein R₅ represents a hydrogen atom, or is selected from C₁-C₂₀ alkyl groups, preferably C₁-C₁₅, linear or branched; or R₄ represents an alkylene group -(CH₂)p- wherein p represents an integer ranging from 1 to 5;
provided that in the general formula (I), in case n is equal to 1 and R₁ is methyl, R₂ is different from phenyl;
(b) at least one co-catalyst selected from organo-derivatives of aluminum, preferably from:
(b₁) aluminum compounds having general formula (III):
Al(R₆)(R₇)(R₈) (III)
wherein R₆ represents a hydrogen atom, or a fluorine atom, or is selected from C₁-C₂₀ alkyl groups, linear or branched, cycloalkyl groups, aryl groups, alkylaryl groups, arylalkyl groups, alkoxy groups; R₇ and R₈, identical or different among them, are selected from C₁-C₂₀ alkyl groups, linear or branched, cycloalkyl groups, aryl groups, alkylaryl groups, arylalkyl groups;
(b₂) aluminoxanes having general formula (IV):
(R₉)₂-Al-O-[-Al(R₁₀)-O-]_{q}-Al-(R₁₁)₂ (IV)
wherein R₉, R₁₀ and R₁₁, identical or different among them, represent a hydrogen atom, or a halogen atom such as chlorine, bromine, iodine, fluorine; or are selected from C₁-C₂₀ alkyl groups, linear or branched, cycloalkyl groups, aryl groups, said groups being optionally substituted with one or more atoms of silicon or germanium; and q is an integer ranging from 0 to 1000;
(b₃) organo-derivative compounds of aluminum partially hydrolyzed;
(b₄) halogen aluminum alkyls having general formula (V) or (VI):
Al(R₁₂)ₙ(X₁)₃₋ₙ (V)
Al₂(R₁₂)ₘ(X₁)₆₋ₘ (VI)
wherein n is 1 or 2; m is an integer ranging from 1 to 5; R₁₂, identical or different among them, are selected from C₁-C₂₀ alkyl groups, linear or branched; X₁ represents a chlorine atom or bromine, preferably chlorine;
or mixtures thereof.

2. Process for the (co)polymerization of conjugated dienes according to claim 1, wherein in said phosphinic vanadium complex having general formula (I) or (II):
- X is an anion selected from halogen such as chlorine, bromine, iodine, preferably chlorine;
- R₁, identical or different among them, are a hydrogen atom; or are selected from C₁-C₂₀ alkyl groups, preferably C₁-C₁₅, linear or branched, preferably are methyl, ethyl, iso-propyl, tert-butyl; or are selected from optionally substituted cycloalkyl groups, preferably are cyclopentyl, cyclohexyl;
- n is an integer ranging from 0 to 3;
- R₂, identical or different among them, are selected from optionally substituted aryl groups, preferably are phenyl;
- R₃, identical or different among them, are selected from C₁-C₂₀ alkyl groups, preferably C₁-C₁₅, linear or branched, preferably are methyl, ethyl; or are selected from optionally substituted aryl groups, preferably are phenyl;
- R₄ represents a group -NR₅ wherein R₅ is a hydrogen atom; or R₄ is a group - (CH₂) p- wherein p is 2.

3. Process for the (co)polymerization of conjugated dienes, according to claim 1 or 2, wherein said co-catalyst is selected from aluminoxanes (b₂) having the general formula (IV), preferably methylaluminoxane (MAO) as such or in the "dry" form (MAO-dry).

4. Process for polymerization of 1,3-butadiene or isoprene, **characterized by** the fact of using the catalytic system according to any one of claims from 1 to 3.

## Patentansprüche

1. Verfahren zur (Co)Polymerisation von konjugierten Dienen, **gekennzeichnet durch** die Tatsache, dass ein katalytisches System verwendet wird, umfassend:
(a) mindestens einen phosphinischen Vanadiumkomplex mit der allgemeinen Formel (I) oder (II):
V(X)₃[P(R₁)ₙ(R₂)₃₋ₙ]₂ (I)
V(X)₃[(R₃)₂P(R₄)P(R₃)₂] (II)
wobei:
- X ein Anion, ausgewählt aus Halogenen wie Chlor, Brom, Iod, vorzugsweise Chlor, darstellt; oder aus den folgenden Gruppen: Thiocyanat, Isocyanat, Sulfat, Säuresulfat, Phosphat, Säurephosphat, Carboxylat, Dicarboxylat, ausgewählt ist;
- R₁, die untereinander gleich oder verschieden sind, ein Wasserstoffatom oder eine Allylgruppe (CH₂=CH-CH₂-) darstellen; oder aus Alkylgruppen C₁-C₂₀, vorzugsweise C₁-C₁₅, linear oder verzweigt, gegebenenfalls halogeniert, gegebenenfalls substituierten Cycloalkylgruppen, ausgewählt sind;
- n eine ganze Zahl im Bereich von 0 bis 3 ist;
- R₂, die untereinander gleich oder verschieden sind, aus gegebenenfalls substituierten Arylgruppen ausgewählt sind;
- R₃, die untereinander gleich oder verschieden sind, ein Wasserstoffatom oder eine Allylgruppe (CH₂=CH-CH₂-) darstellen; oder aus Alkylgruppen C₁-C₂₀, vorzugsweise C₁-C₁₅, linear oder verzweigt, gegebenenfalls halogeniert, gegebenenfalls substituierten Cycloalkylgruppen, gegebenenfalls substituierten Arylgruppen, ausgewählt sind;
- R₄ eine Gruppe -NR₅ darstellt, wobei R₅ ein Wasserstoffatom darstellt oder aus C₁-C₂₀-Alkylgruppen, vorzugsweise C₁-C₁₅, linear oder verzweigt, ausgewählt ist; oder R₄ eine Alkylengruppe -(CH₂)ₚ- darstellt, wobei p eine ganze Zahl im Bereich von 1 bis 5 darstellt;
mit der Maßgabe, dass in der allgemeinen Formel (I), wenn n gleich 1 ist und R₁ Methyl ist, R₂ von Phenyl verschieden ist;
(b) mindestens einen Co-Katalysator, ausgewählt aus Organo-Derivaten von Aluminium, vorzugsweise aus:
(b₁) Aluminiumverbindungen mit der allgemeinen Formel (III):
Al(R₆)(R₇)(Rₐ) (III)
wobei R₆ ein Wasserstoffatom oder ein Fluoratom darstellt, oder aus C₁-C₂₀-Alkylgruppen, linear oder verzweigt, Cycloalkylgruppen, Arylgruppen, Alkylarylgruppen, Arylalkylgruppen, Alkoxygruppen, ausgewählt ist; R₇ und R₈, die untereinander gleich oder verschieden sind, aus C₁-C₂₀-Alkylgruppen, linear oder verzweigt, Cycloalkylgruppen, Arylgruppen, Alkylarylgruppen, Arylalkylgruppen, ausgewählt sind;
(b₂) Aluminoxane mit der allgemeinen Formel (IV):
(R₉)₂-Al-O-[-Al(R₁₀)-O-]_{q}-Al-(R₁₁)₂ (IV)
wobei R₉, R₁₀ und R₁₁, die untereinander gleich oder verschieden sind, ein Wasserstoffatom oder ein Halogenatom, wie Chlor, Brom, Iod, Fluor, darstellen; oder aus C₁-C₂₀-Alkylgruppen, linear oder verzweigt, Cycloalkylgruppen, Arylgruppen, ausgewählt sind, wobei die Gruppen gegebenenfalls mit einem oder mehreren Atomen von Silizium oder Germanium substituiert sind; und q eine ganze Zahl im Bereich von 0 bis 1000 ist;
(b₃) Organo-Derivat-Verbindungen von Aluminium, die teilweise hydrolysiert sind;
(b₄) Halogenaluminiumalkylen mit der allgemeinen Formel (V) oder (VI):
Al(R₁₂)ₙ(X₁)₃₋ₙ (V)
Al₂(R₁₂)ₘ(X₁)₆₋ₘ (VI)
wobei n 1 oder 2 beträgt; m eine ganze Zahl im Bereich von 1 bis 5 ist; R₁₂, die untereinander gleich oder verschieden sind, aus C₁-C₂₀-Alkylgruppen, linear oder verzweigt, ausgewählt sind; X₁ ein Chloratom oder Brom, vorzugsweise Chlor, darstellt;
oder Gemischen davon.

2. Verfahren zur (Co)Polymerisation von konjugierten Dienen nach Anspruch 1, wobei in dem phosphinischen Vanadiumkomplex mit der Formel (I) oder (II):
- X ein Anion ist, ausgewählt aus Halogenen wie Chlor, Brom, Iod, vorzugsweise Chlor;
- R₁, die untereinander gleich oder verschieden sind, ein Wasserstoffatom sind; oder aus C₁-C₂₀-Alkylgruppen, vorzugsweise C₁-C₁₅, linear oder verzweigt, vorzugsweise Methyl, Ethyl, iso-Propyl, tert-Butyl, ausgewählt sind; oder aus gegebenenfalls substituierten Cycloalkylgruppen ausgewählt sind, vorzugsweise Cyclopentyl, Cyclohexyl sind;
- n eine ganze Zahl im Bereich von 0 bis 3 ist;
- R₂, die untereinander gleich oder verschieden sind, aus gegebenenfalls substituierten Arylgruppen ausgewählt sind, vorzugsweise Phenyl sind;
- R₃, die untereinander gleich oder verschieden sind, aus C₁-C₂₀-Alkylgruppen, vorzugsweise C₁-C₁₅, linear oder verzweigt, ausgewählt sind, vorzugsweise Methyl, Ethyl sind; oder aus gegebenenfalls substituierten Arylgruppen ausgewählt sind, vorzugsweise Phenyl sind;
- R₄ eine Gruppe -NR₅ darstellt, wobei R₅ ein Wasserstoffatom ist; oder R₄ eine Gruppe -(CH₂)ₚ- ist, wobei p 2 beträgt.

3. Verfahren zur (Co)Polymerisation von konjugierten Dienen nach Anspruch 1 oder 2, wobei der Co-Katalysator aus Aluminoxanen (b₂) mit der allgemeinen Formel (IV), vorzugsweise Methylaluminoxan (MAO) als solches oder in der "trockenen" Form (MAO-dry), ausgewählt ist.

4. Verfahren zur Polymerisation von 1,3-Butadien oder Isopren, **gekennzeichnet durch** die Tatsache, dass das katalytische System nach einem der Ansprüche 1 bis 3 verwendet wird.

## Revendications

1. Procédé pour la (co)polymérisation de diènes conjugués, **caractérisé par** l'utilisation d'un système catalytique comprenant :
(a) au moins un complexe de vanadium phosphinique ayant la formule générale (I) ou (II) :
V(X)₃[P(R₁)ₙ(R₂)₃₋ₙ]₂ (I)
V(X)₃[(R₃)₂P(R₄)P(R₃)₂] (II)
dans laquelle :
- X représente un anion choisi parmi les halogènes comme le chlore, le brome, l'iode, de préférence le chlore ; ou est choisi parmi les groupes suivants : thiocyanate, isocyanate, sulfate, sulfate acide, phosphate, phosphate acide, carboxylate, dicarboxylate ;
- les R₁, identiques ou différents entre eux, représentent un atome d'hydrogène ou un groupe allyle (CH₂=CH-CH₂-) ; ou sont choisis parmi les groupes alkyle en C₁ à C₂₀, de préférence en C₁ à C₁₅, linéaires ou ramifiés, éventuellement halogénés, les groupes cycloalkyle éventuellement substitués ;
- n est un entier situé dans la plage allant de 0 à 3 ;
- les R₂, identiques ou différents entre eux, sont choisis parmi les groupes aryle éventuellement substitués ;
- les R₃, identiques ou différents entre eux, représentent un atome d'hydrogène ou un groupe allyle (CH₂=CH-CH₂-) ; ou sont choisis parmi les groupes alkyle en C₁ à C₂₀, de préférence en C₁ à C₁₅, linéaires ou ramifiés, éventuellement halogénés, les groupes cycloalkyle éventuellement substitués, les groupes aryle éventuellement substitués ;
- R₄ représente un groupe -NR₅ où R₅ représente un atome d'hydrogène, ou est choisi parmi les groupes alkyle en C₁ à C₂₀, de préférence en C₁ à C₁₅, linéaires ou ramifiés ; ou R₄ représente un groupe alkylène -(CH₂)ₚ- dans lequel p représente un entier situé dans la plage allant de 1 à 5 ;
sous réserve que, dans la formule générale (I), dans le cas où n est égal à 1 et R₁ est méthyle, R₂ soit différent de phényle ;
(b) au moins un co-catalyseur choisi parmi les dérivés organiques de l'aluminium, de préférence parmi :
(b₁) les composés de l'aluminium ayant la formule générale (III) :
Al(R₆)(R₇)(R₈) (III)
dans laquelle R₆ représente un atome d'hydrogène ou un atome de fluor, ou est choisi parmi les groupes alkyle en C₁ à C₂₀ linéaires ou ramifiés, les groupes cycloalkyle, les groupes aryle, les groupes alkylaryle, les groupes arylalkyle, les groupes alcoxy ; R₇ et R₈, identiques ou différents entre eux, sont choisis parmi les groupes alkyle en C₁ à C₂₀ linéaires ou ramifiés, les groupes cycloalkyle, les groupes aryle, les groupes alkylaryle, les groupes arylalkyle ;
(b₂) les aluminoxanes ayant la formule générale (IV) :
(R₉)₂-Al-O-[-Al(R₁₀)-O-]_{q}-Al-(R₁₁)₂ (IV)
dans laquelle les R₉, R₁₀ et R₁₁, identiques ou différents entre eux, représentent un atome d'hydrogène, ou un atome d'halogène comme le chlore, le brome, l'iode, le fluor ; ou sont choisis parmi les groupes alkyle en C₁ à C₂₀ linéaires ou ramifiés, les groupes cycloalkyle, les groupes aryle, lesdits groupes étant éventuellement substitués par un ou plusieurs atomes de silicium ou de germanium ; et q est un entier situé dans la plage allant de 0 à 1000 ;
(b₃) les composés dérivés organiques de l'aluminium partiellement hydrolysés ;
(b₄) les alkyl-aluminiums halogénés ayant la formule générale (V) ou (VI) :
Al(R₁₂)ₙ(X₁)₃₋ₙ (V)
Al₂(R₁₂)ₘ(X₁)₆₋ₘ (VI)
dans laquelle n vaut 1 ou 2 ; m est un entier situé dans la plage allant de 1 à 5 ; les R₁₂, identiques ou différents entre eux, sont choisis parmi les groupes alkyle en C₁ à C₂₀ linéaires ou ramifiés ; X₁ représente un atome de chlore ou de brome, de préférence de chlore ;
ou leurs mélanges.

2. Procédé pour la (co)polymérisation de diènes conjugués selon la revendication 1, dans lequel, dans ledit complexe de vanadium phosphinique ayant la formule générale (I) ou (II) :
- X est un anion choisi parmi les halogènes comme le chlore, le brome, l'iode, de préférence le chlore ;
- les R₁, identiques ou différents entre eux, sont un atome d'hydrogène ; ou sont choisis parmi les groupes alkyle en C₁ à C₂₀, de préférence en C₁ à C₁₅, linéaires ou ramifiés, de préférence sont méthyle, éthyle, isopropyle, tert-butyle ; ou sont choisis parmi les groupes cycloalkyle éventuellement substitués, de préférence sont cyclopentyle, cyclohexyle ;
- n est un entier situé dans la plage allant de 0 à 3 ;
- les R₂, identiques ou différents entre eux, sont choisis parmi les groupes aryle éventuellement substitués, de préférence sont phényle ;
- les R₃, identiques ou différents entre eux, sont choisis parmi les groupes alkyle en C₁ à C₂₀, de préférence en C₁ à C₁₅, linéaires ou ramifiés, de préférence sont méthyle, éthyle ; ou sont choisis parmi les groupes aryle éventuellement substitués, de préférence sont phényle ;
- R₄ représente un groupe -NR₅ où R₅ est un atome d'hydrogène ; ou R₄ est un groupe -(CH₂)ₚ- où p vaut 2.

3. Procédé pour la (co)polymérisation de diènes conjugués selon la revendication 1 ou 2, dans lequel ledit co-catalyseur est choisi parmi les aluminoxanes (b₂) ayant la formule générale (IV), de préférence le méthylaluminoxane (MAO) en tant que tel ou sous forme "sèche" (MAO-dry).

4. Procédé pour la polymérisation du 1,3-butadiène ou de l'isoprène, **caractérisé par** l'utilisation du système catalytique selon l'une quelconque des revendications 1 à 3.
